# EUROPEAN PATENT SPECIFICATION

(11) **EP 4 621 717 B1**
(45) Date of publication and mention of the grant of the patent: **24.06.2026**
(21) Application number: 24164474.9
(22) Date of filing: 19.03.2024
(51) Int. Cl.: G06T 11/00

(54) **GENERATION OF A SYNTHETIC MEDICAL IMAGE**
ERZEUGUNG EINES SYNTHETISCHEN MEDIZINISCHEN BILDES
GÉNÉRATION D'UNE IMAGE MÉDICALE SYNTHÉTIQUE

(43) Date of publication of application: 24.09.2025
(73) Proprietor: Bayer Aktiengesellschaft, 51373 Leverkusen (DE)
(72) Inventor: HOOGE, Jens, 51373 Leverkusen (DE); LOURO COSTA OSORIO, Pedro, 08970 Sant Juan Despi (ES); JIMENEZ, Guillermo, 08970 Sant Juan Despi (ES)
(74) Representative: BIP Patents

(56) References cited:
- XIANGXI MENG ET AL: "A Novel Unified Conditional Score-based Generative Framework for Multi-modal Medical Image Completion", ARXIV.ORG, CORNELL UNIVERSITY LIBRARY, 201 OLIN LIBRARY CORNELL UNIVERSITY ITHACA, NY 14853, 7 July 2022 (2022-07-07), XP091265005
- JIANG LAN ET AL: "CoLa-Diff: Conditional Latent Diffusion Model for Multi-modal MRI Synthesis", 1 October 2023, MEDICAL IMAGE COMPUTING AND COMPUTER ASSISTED INTERVENTION - MICCAI 2023; [LECTURE NOTES IN COMPUTER SCIENCE; LECT.NOTES COMPUTER], SPRINGER NATURE SWITZERLAND, CHAM, PAGE(S) 398 - 408, ISBN: 978-3-031-43998-8, ISSN: 0302-9743, XP047671786
- "Machine Learning : Knowledge Representation, Learning and Expert Systems : A Guide to Current Research", 1 March 1997, SPRINGER US, article MITCHELL TOM M. ET AL: "Machine Learning", pages: 97 - 97, XP093188429

## Description

### FIELD OF THE DISCLOSURE

Systems, methods, and computer programs disclosed herein relate to training a machine learning model and using the trained machine learning model to generate synthetic medical images.

### BACKGROUND

Medical imaging is a crucial tool in modern medicine, providing valuable insights into the human body's structure and function. The various imaging modalities, such as X-ray, MRI, CT, PET, and ultrasound, each offer unique benefits. For instance, X-rays are excellent for visualizing bone structure, while MRIs are better for soft tissues. By using multiple modalities, doctors can get a more comprehensive view of a patient's condition.

Combining different modalities can increase diagnostic accuracy. For example, PET/CT combines the functional information from a PET scan with the anatomical information from a CT scan. This combination can help to accurately localize abnormalities and guide treatment decisions. For example, in radiation therapy for cancer, CT scans are used for dose calculations, while MRI provides superior delineation of the tumor and surrounding tissues.

Certain imaging modalities are safer for certain patient groups. For example, ultrasound and MRI do not use ionizing radiation, making them safer options for pregnant women and children.

Since not all imaging modalities are always available, there are approaches to synthetically generate images of one modality based on one or more images of one or more other modalities. This process is known as image synthesis or cross-modality image translation, and it is an active area of research in medical imaging and machine learning.

X. Meng et al: disclose a unified conditional score-based generative framework for multi-modal medical image completion (X. Meng et al: A Novel Unified Conditional Score-based Generative Framework for Multi-modal Medical Image Completion, arXiv:2207.03430v1 [eess.IV], 7 Jul 2022).

Cross-modality image translation is typically achieved using advanced machine learning techniques, particularly deep learning models such as Generative Adversarial Networks (GANs) or Convolutional Neural Networks (CNNs). These models can be trained on pairs of corresponding images from two different modalities (for example, MRI and CT), learning to translate an image from one modality to the other.

For example, US11170543B2B2 and US11181598B2 describe methods for MRI image reconstruction from undersampled data using machine learning models.

For example, WO2016/175755A1 and WO2014/036473A1 describe methods for generating a high radiation dose CT image based on a low radiation dose CT image using machine learning models.

For example, WO2022120731A1 discloses an MRI-PT image conversion method based on a recurrent adversarial network.

For example, US20220292737 discloses a method for converting an MRI image to a CT image using a trained machine learning model.

The machine learning models disclosed in the cited publications are or include Convolutional Neural Networks. Such machine learning models can be difficult to train, and they often require extensive tuning of hyperparameters; such models can be unstable and sometimes produce images that are not realistic or do not match the training data. Overfitting is a frequently observed problem (see, e.g., P. Thanapol et al.: Reducing Overfitting and Improving Generalization in Training Convolutional Neural Network (CNN) under Limited Sample Sizes in Image Recognition, 2020, 5th International Conference on Information Technology (InCIT), pp. 300-305, doi: 10.1109/InCIT50588.2020.9310787.

There is therefore a need for methods to generate synthetic medical images that are easy to train, flexible to handle and do not exhibit overfitting.

### SUMMARY

These and other problems are solved by the subject matter of the independent claims of the present disclosure. Preferred embodiments are defined in the dependent claims, the description and the drawings.

In a first aspect, the present disclosure relates to a computer-implemented method comprising:
- providing a plurality of data sets of a plurality of examination objects, each data set comprising (i) one or more base medical images of one or more base imaging techniques and (ii) a target medical image of a target imaging technique, wherein each base medical image is a result of an examination of an examination region of an examination object using one of the base imaging techniques, and the target medical image is a result of an examination of the examination region of the examination object using the target imaging technique,
- providing an image encoder, wherein the image encoder is configured and trained to generate an image embedding based on one or more medical images,
- for each data set: generating at least one image embedding of the one or more base medical images using the image encoder,
- providing a conditional generative model, wherein the conditional generative model is configured to generate a reconstructed medical image based on a medical image, a condition and model parameters,
- training the conditional generative model, wherein the training comprises, for each data set:
   - generating a reconstructed target medical image based on the target medical image and the at least one image embedding of the one or more base medical images, wherein the condition in the generation of the reconstructed target medical image is based on the at least one image embedding of the one or more base medical images,
   - determining a deviation between the target medical image and the reconstructed target medical image,
   - reducing the deviation by modifying model parameters of the conditional generative model,
- receiving one or more medical images of a new examination object, wherein each medical image is a result of an examination of the examination region of the new examination using one of the base imaging techniques,
- generating at least one image embedding based on the one or more medical images of the new examination object using the image encoder,
- generating a synthetic medical image using the trained conditional generative model, wherein the condition in the generation of the synthetic medical image is based on the at least one image embedding of the new examination object,
- outputting and/or storing the synthetic medical image and/or transmitting the synthetic medical image to a separate computer system,

wherein one or more data sets of the plurality of data sets comprise multiple base medical images and the target medical image,
wherein each base medical image of the multiple base medical images is a result of an examination of the examination region of the examination object using one of the base imaging techniques,
wherein generating at least one image embedding of the one or more base medical images using the image encoder comprises:
   - masking at least a part of one or more base medical images of the multiple base medical images,
   - generating an image embedding of each base medical image and each at least partly masked base medical image, and combining the image embeddings into a combined image embedding,
wherein generating a reconstructed target medical image based on the target medical image and the at least one image embedding of the one or more base medical images comprises: generating a reconstructed target medical image based on the target medical image and the combined image embedding of the base medical images, wherein the combined image embedding of the base medical images is used as a condition in the generation of the reconstructed target medical image.

In another aspect, the present disclosure provides a computer system comprising:
a processor; and
a memory storing an application program configured to perform, when executed by the processor, an operation, the operation comprising:
   - providing a plurality of data sets of a plurality of examination objects, each data set comprising (i) one or more base medical images of one or more base imaging techniques and (ii) a target medical image of a target imaging technique, wherein each base medical image is a result of an examination of an examination region of an examination object using one of the base imaging techniques, and the target medical image is a result of an examination of the examination region of the examination object using the target imaging technique,
   - providing an image encoder, wherein the image encoder is configured and trained to generate an image embedding based on one or more medical images,
   - for each data set: generating at least one image embedding of the one or more base medical images using the image encoder,
   - providing a conditional generative model, wherein the conditional generative model is configured to generate a reconstructed medical image based on a medical image, a condition and model parameters,
   - training the conditional generative model, wherein the training comprises, for each data set:
      - generating a reconstructed target medical image based on the target medical image and the at least one image embedding of the one or more base medical images, wherein the condition in the generation of the reconstructed target medical image is based on the at least one image embedding of the one or more base medical images,
      - determining a deviation between the target medical image and the reconstructed target medical image,
      - reducing the deviation by modifying model parameters of the conditional generative model,
   - receiving one or more medical images of a new examination object, wherein each medical image is a result of an examination of the examination region of the new examination using one of the base imaging techniques,
   - generating at least one image embedding based on the one or more medical images of the new examination object using the image encoder,
   - generating a synthetic medical image using the trained conditional generative model, wherein the condition in the generation of the synthetic medical image is based on the at least one image embedding of the new examination object,
   - outputting and/or storing the synthetic medical image and/or transmitting the synthetic medical image to a separate computer system,
wherein one or more data sets of the plurality of data sets comprise multiple base medical images and the target medical image,
wherein each base medical image of the multiple base medical images is a result of an examination of the examination region of the examination object using one of the base imaging techniques,
wherein generating at least one image embedding of the one or more base medical images using the image encoder comprises:
   - masking at least a part of one or more base medical images of the multiple base medical images,
   - generating an image embedding of each base medical image and each at least partly masked base medical image, and combining the image embeddings into a combined image embedding,
wherein generating a reconstructed target medical image based on the target medical image and the at least one image embedding of the one or more base medical images comprises: generating a reconstructed target medical image based on the target medical image and the combined image embedding of the base medical images, wherein the combined image embedding of the base medical images is used as a condition in the generation of the reconstructed target medical image.

In another aspect, the present disclosure provides a non-transitory computer readable storage medium having stored thereon software instructions that, when executed by a processor of a computer system, cause the computer system to execute the following steps:
- providing a plurality of data sets of a plurality of examination objects, each data set comprising (i) one or more base medical images of one or more base imaging techniques and (ii) a target medical image of a target imaging technique, wherein each base medical image is a result of an examination of an examination region of an examination object using one of the base imaging techniques, and the target medical image is a result of an examination of the examination region of the examination object using the target imaging technique,
- providing an image encoder, wherein the image encoder is configured and trained to generate an image embedding based on one or more medical images,
- for each data set: generating at least one image embedding of the one or more base medical images using the image encoder,
- providing a conditional generative model, wherein the conditional generative model is configured to generate a reconstructed medical image based on a medical image, a condition and model parameters,
- training the conditional generative model, wherein the training comprises, for each data set:
   - generating a reconstructed target medical image based on the target medical image and the at least one image embedding of the one or more base medical images, wherein the condition in the generation of the reconstructed target medical image is based on the at least one image embedding of the one or more base medical images,
   - determining a deviation between the target medical image and the reconstructed target medical image,
   - reducing the deviation by modifying model parameters of the conditional generative model,
- receiving one or more medical images of a new examination object, wherein each medical image is a result of an examination of the examination region of the new examination using one of the base imaging techniques,
- generating at least one image embedding based on the one or more medical images of the new examination object using the image encoder,
- generating a synthetic medical image using the trained conditional generative model, wherein the condition in the generation of the synthetic medical image is based on the at least one image embedding of the new examination object,
- outputting and/or storing the synthetic medical image and/or transmitting the synthetic medical image to a separate computer system,

wherein one or more data sets of the plurality of data sets comprise multiple base medical images and the target medical image,
wherein each base medical image of the multiple base medical images is a result of an examination of the examination region of the examination object using one of the base imaging techniques,
wherein generating at least one image embedding of the one or more base medical images using the image encoder comprises:
   - masking at least a part of one or more base medical images of the multiple base medical images,
   - generating an image embedding of each base medical image and each at least partly masked base medical image, and combining the image embeddings into a combined image embedding,
wherein generating a reconstructed target medical image based on the target medical image and the at least one image embedding of the one or more base medical images comprises: generating a reconstructed target medical image based on the target medical image and the combined image embedding of the base medical images, wherein the combined image embedding of the base medical images is used as a condition in the generation of the reconstructed target medical image.

Further aspects are disclosed in the description.

### BRIEF DESCRIPTION OF THE DRAWINGS

Fig. 1 shows schematically an embodiment of the training of the conditional generative model.
Fig. 2 shows schematically another embodiment of the training of the conditional generative model.
Fig. 3 shows a schematic example of how an image embedding is generated from a medical image.
Fig. 4 shows a schematic example of how parts of an image embedding can be masked.
Fig. 5 shows a schematic example of the generation of several image embeddings and the combination of the image embeddings into a single image embedding.
Fig. 6 shows an example of masking patches and/or image tokens.
Fig. 7 shows another example of masking patches and/or image tokens.
Fig. 8 shows another example of generating an image embedding based on multiple medical images.
Fig. 9 shows an embodiment for generating a synthetic medical image based on a medical image.
Fig. 10 shows an embodiment for generating a synthetic medical image based on several medical images.
Fig. 11 shows another embodiment for generating a synthetic medical image based on several medical images.
Fig. 12 shows an embodiment of the computer-implemented method of the present disclosure in the form of a flow chart.
Fig. 13 illustrates a computer system according to some example implementations of the present disclosure in more detail.

### DETAILED DESCRIPTION

The invention will be more particularly elucidated below without distinguishing between the aspects of the invention (computer-implemented method, computer system, computer-readable storage medium). On the contrary, the following elucidations are intended to apply analogously to all the aspects of the invention, irrespective of in which context (computer-implemented method, computer system, computer-readable storage medium) they occur.

If steps are stated in an order in the present description or in the claims, this does not necessarily mean that the invention is restricted to the stated order. On the contrary, it is conceivable that the steps can also be executed in a different order or else in parallel to one another, unless one step builds upon another step, this requiring that the building step be executed subsequently (this being, however, clear in the individual case). The stated orders are thus preferred embodiments of the present disclosure.

As used herein, the articles "a" and "an" are intended to include one or more items and may be used interchangeably with "one or more" and "at least one." As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

Unless defined otherwise, all technical and scientific terms used herein have the same meaning as commonly understood by one of ordinary skill in the art.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

The present disclosure provides means for generating a synthetic medical image of an examination region of an examination object.

The term "synthetic" means that the synthetic medical image is not the (direct) result of a physical measurement on a real object under examination, but that the synthetic medical image has been generated by a machine learning model. A synonym for the term "synthetic" is the term "artificial". A synthetic medical image may however be based on one or more measured medical images, i.e., the machine learning model may be able to generate the synthetic medical image based on one or more measured medical images (and/or other/further data).

The "examination object" is preferably a living being, more preferably a mammal, most preferably a human.

The "examination region" is a part of the examination object, for example an organ or part of an organ or a plurality of organs or another part of the examination object.

For example, the examination region may be a liver, kidney, heart, lung, brain, stomach, bladder, prostate, intestine, thyroid, eye, breast or a part of said parts or another part of the body of a mammal (for example a human).

In one embodiment, the examination region includes a liver or part of a liver or the examination region is a liver or part of a liver of a mammal, preferably a human.

In a further embodiment, the examination region includes a brain or part of a brain or the examination region is a brain or part of a brain of a mammal, preferably a human.

In a further embodiment, the examination region includes a heart or part of a heart or the examination region is a heart or part of a heart of a mammal, preferably a human.

In a further embodiment, the examination region includes a thorax or part of a thorax or the examination region is a thorax or part of a thorax of a mammal, preferably a human.

In a further embodiment, the examination region includes a stomach or part of a stomach or the examination region is a stomach or part of a stomach of a mammal, preferably a human.

In a further embodiment, the examination region includes a pancreas or part of a pancreas or the examination region is a pancreas or part of a pancreas of a mammal, preferably a human.

In a further embodiment, the examination region includes a kidney or part of a kidney or the examination region is a kidney or part of a kidney of a mammal, preferably a human.

In a further embodiment, the examination region includes one or both lungs or part of a lung of a mammal, preferably a human.

In a further embodiment, the examination region includes a thyroid or part of a thyroid of a mammal, preferably a human.

In a further embodiment, the examination region includes an eye or part of an eye of a mammal, preferably a human.

In a further embodiment, the examination region includes a breast or part of a breast or the examination region is a breast or part of a breast of a female mammal, preferably a female human.

In a further embodiment, the examination region includes a prostate or part of a prostate or the examination region is a prostate or part of a prostate of a male mammal, preferably a male human.

The term "image" as used herein means preferably a data structure that represents a spatial distribution of a physical signal. The spatial distribution may be of any dimension, for example 2D, 3D, 4D or any higher dimension. The spatial distribution may be of any shape, for example forming a grid and thereby defining pixels or voxels, the grid being possibly irregular or regular. The physical signal may be any signal, for example proton density, tissue echogenicity, tissue radiolucency, measurements related to the blood flow, information of rotating hydrogen nuclei in a magnetic field, color, level of gray, depth, surface or volume occupancy, such that the image may be a 2D or 3D RGB/grayscale/depth image, or a 3D surface/volume occupancy model. An image is usually composed of discrete image elements (e.g., pixels for 2D images, voxels for 3D images, doxels for 4D images).

The present invention is described in this disclosure predominantly using the example of images representing an examination region of an examination object in real space. However, it should be noted that the present invention can also be applied to representations of an examination region in other spaces, for example, representations of the examination region in frequency space or projection space. In this respect, the term "image" is to be interpreted broadly.

A "medical image" is a preferably visual representation of the human body or a part thereof or a visual representation of the body of an animal or a part thereof. Medical images can be used, e.g., for diagnostic and/or treatment purposes.

Techniques for generating medical images include X-ray radiography, computerized tomography, fluoroscopy, magnetic resonance imaging, ultrasonography, endoscopy, elastography, tactile imaging, thermography, microscopy, positron emission tomography, optical coherence tomography, fundus photography, and others.

Examples of medical images include CT (computer tomography) scans, X-ray images, MRI (magnetic resonance imaging) scans, PET (positron emission tomography) scans, fluorescein angiography images, OCT (optical coherence tomography) scans, histological images, ultrasound images, fundus images and/or others.

In an embodiment of the present disclosure, the synthetic medical image is a synthetic radiologic image. "Radiology" is the branch of medicine concerned with the application of electromagnetic radiation and mechanical waves (including, for example, ultrasound diagnostics) for diagnostic, therapeutic and/or scientific purposes. In addition to X-rays, other ionizing radiation such as gamma rays or electrons are also used. Since a primary purpose is imaging, other imaging procedures such as sonography and magnetic resonance imaging (MRI) are also included in radiology, although no ionizing radiation is used in these procedures. Thus, the term "radiology" as used in the present disclosure includes, in particular, the following examination procedures: computed tomography, magnetic resonance imaging, sonography, positron emission tomography.

In an embodiment of the present disclosure, the synthetic medical image is a synthetic MRI image.

In another embodiment of the present disclosure, the synthetic medical image is a synthetic CT image.

In another embodiment of the present disclosure, the synthetic medical image is a synthetic ultrasound image.

In another embodiment of the present disclosure, the synthetic medical image is a synthetic PET image.

In radiology, contrast media are often used for contrast enhancement. The synthetic medical image can be a synthetic radiologic image that shows an examination region of an examination object without contrast agent or after application of an amount of a contrast agent.

"Contrast agents" are substances or mixtures of substances that improve the depiction of structures and functions of the body in medical examinations.

In computed tomography, iodine-containing solutions are usually used as contrast agents. In magnetic resonance imaging (MRI), superparamagnetic substances (for example iron oxide nanoparticles, superparamagnetic iron-platinum particles (SIPPs)) or paramagnetic substances (for example gadolinium chelates, manganese chelates, hafnium chelates) are usually used as contrast agents. In the case of sonography, liquids containing gas-filled microbubbles are usually administered intravenously. In positron emission tomography (PET) radiotracers are used as contrast agents. Contrast in PET images is caused by the differential uptake of the radiotracer in different tissues or organs. A radiotracer is a radioactive substance that is injected into the examination object. The radiotracer emits positrons. When a positron collides with an electron within the examination region of the examination object, both particles are annihilated, producing two gamma rays that are emitted in opposite directions. These gamma rays are then detected by a PET scanner, allowing the creation of detailed images of the body's internal functioning.

Examples of contrast agents can be found in the literature (see for example A.S.L. Jascinth et al.: Contrast Agents in computed tomography: A Review, Journal of Applied Dental and Medical Sciences, 2016, vol. 2, issue 2, 143-149; H. Lusic et al.: X-ray-Computed Tomography Contrast Agents, Chem. Rev. 2013, 113, 3, 1641-1666; https://www.radiology.wisc.edu/wp-content/uploads/2017/10/contrast-agents-tutorial.pdf, M.R. Nouh et al.: Radiographic and magnetic resonances contrast agents: Essentials and tips for safe practices, World J Radiol. 2017 Sep. 28; 9(9): 339-349; L.C. Abonyi et al.: Intravascular Contrast Media in Radiography: Historical Development & Review of Risk Factors for Adverse Reactions, South American Journal of Clinical Research, 2016, vol. 3, issue 1, 1-10; ACR Manual on Contrast Media, 2020, ISBN: 978-1-55903-012-0; A. Ignee et al.: Ultrasound contrast agents, Endosc Ultrasound. 2016 Nov-Dec; 5(6): 355-362; J. Trotter et al.: Positron Emission Tomography (PET)/Computed Tomography (CT) Imaging in Radiation Therapy Treatment Planning: A Review of PET Imaging Tracers and Methods to Incorporate PET/CT, Advances in Radiation Oncology (2023) 8, 101212).

The synthetic medical image is generated based on one or more medical images.

Each medical image of the one or more medical images is a result of an examination of an examination region of an examination object using a base imaging technique. In other words: each medical image of the one or more medical images is an image generated by a base imaging technique. Each basic medical image shows the same examination region of the same examination object or at least a part of it.

The synthetic medical image is a synthetic image of the examination region of the examination object that looks as if the examination region has been examined using a target image technique. In other words: if the examination region of the examination object were subjected to an examination using the target imaging technique, a result of this examination would be a medical image that looks like the synthetic medical image. The synthetic medical image shows the same examination region of the same examination object as any base medical image or at least a part of it.

The terms "base" and "target" were chosen to differentiate between the different imaging techniques. The term "base" refers to one or more imaging techniques used to generate the medical images on which the synthetic medical image is based. The term "target" refers to the imaging technique that must be used to generate a medical image that looks like the synthetic medical image. The terms "base" and "target" have no other restrictive meaning. In principle, any target imaging technique can also be a base imaging technique and *vice versa.* In particular, when describing the training of the conditional generative model, the terms "base" and "target" are also used in relation to the medical images generated by the corresponding imaging techniques.

The (target and/or base) imaging techniques can be, for example: X-ray radiography, computerized tomography, fluoroscopy, magnetic resonance imaging, ultrasonography, endoscopy, elastography, tactile imaging, thermography, microscopy, positron emission tomography, optical coherence tomography, fundus photography, and/or others.

The (target and/or base) imaging techniques can also be or comprise different measurement protocols.

Common imaging techniques / measurement protocols in MRI are, for example: T1-weighted imaging, T2-weighgted imaging, fluid-attenuated inversion recovery (FLAIR), diffusion-weighted imaging (DWI), gradient echo (GRE), susceptibility-weighted imaging (SWI), magnetic resonance angiography (MRA), magnetic resonance spectroscopy (MRS), functional MRI (fMRI).

Common imaging techniques / measurement protocols in CT are, for example: standard CT scan, contrast-enhanced CT scan, CT angiography (CTA), CT perfusion, spiral or helical CT, multi-detector CT (MDCT), dual-energy CT, high resolution CT (HRCT).

Common imaging techniques / measurement protocols in sonography are, for example: B-mode imaging, M-mode imaging, Doppler ultrasound, color Doppler, power Doppler, pulse-wave Doppler, continuous-wave Doppler, echocardiography, transesophageal echocardiography (TEE), intravascular ultrasound (IVUS), elastography.

Common imaging techniques / measurement protocols in PET are, for example: FDG-EP, PET/CT, PET/MRI, amyloid PET, dopamine PET, cardiac PET, choline PET, sodium fluoride PET, Gallium-68 DOTATATE PET.

Common imaging techniques / measurement protocols in microscopy are, for example: bright-field microscopy, dark-field microscopy, phase-contrast microscopy, differential interference contrast (DIC) microscopy, fluorescence microscopy, confocal microscopy, two-photon microscopy, electron microscopy, atomic force microscopy.

Common imaging techniques / measurement protocols in OCT are, for example: time-domain OCT (TD-OCT), Fourier-domain OCT (FD-OCT), swept-source OCT (SS-OCT), polarization-sensitive OCT (PS-OCT), Doppler OCT, optical coherence tomography angiography (OCTA), en face OCT, adaptive optics OCT (AO-OCT).

Different imaging techniques may also refer to different amounts of contrast agent and/or different contrast agents.

In an embodiment of the present disclosure, the one or more base imaging techniques comprise one or more MRI imaging techniques and the target imaging technique is CT. In other words, the one or more base medical images comprise one or more MRI images generated using one or more MRI measurement protocols, and the synthetic medical image is a synthetic CT image.

In an embodiment of the present disclosure, the one or more base imaging techniques comprise one or more CT imaging techniques and the target imaging technique is MRI. In other words, the one or more base medical images comprise one or more CT images generated using one or more CT measurement protocols, and the synthetic medical image is a synthetic MRI image.

In an embodiment of the present disclosure, the one or more base imaging techniques comprise one or more CT imaging techniques and the target imaging technique is PET. In other words, the one or more base medical images comprise one or more CT images generated using one or more CT measurement protocols, and the synthetic medical image is a synthetic PET image.

In an embodiment of the present disclosure, the one or more base imaging techniques comprise one or more MRI imaging techniques and the target imaging technique is PET. In other words, the one or more base medical images comprise one or more MRI images generated using one or more MRI measurement protocols, and the synthetic medical image is a synthetic PET image.

In an embodiment of the present disclosure, the one or more base imaging techniques comprise one or more MRI imaging techniques and one or more CT imaging techniques and the target imaging technique is PET. In other words, the one or more base medical images comprise one or more MRI images generated using one or more MRI measurement protocols and one or more CT images generated using one or more CT measurement protocols, and the synthetic medical image is a synthetic PET image.

In an embodiment of the present disclosure, the one or more base imaging techniques comprise one or more PET imaging techniques and the target imaging technique is MRI. In other words, the one or more base medical images comprise one or more PET images generated using one or more PET measurement protocols, and the synthetic medical image is a synthetic MRI image.

In an embodiment of the present disclosure, the one or more base imaging techniques comprise one or more PET imaging techniques and the target imaging technique is CT. In other words, the one or more base medical images comprise one or more PET images generated using one or more PET measurement protocols, and the synthetic medical image is a synthetic CT image.

In an embodiment of the present disclosure, the one or more base imaging techniques comprise one or more sonography imaging techniques and the target imaging technique is CT. In other words, the one or more base medical images comprise one or more ultrasound images generated using one or more sonography measurement protocols, and the synthetic medical image is a synthetic CT image.

In an embodiment of the present disclosure, the one or more base imaging techniques comprise one or more sonography imaging techniques and the target imaging technique is MRI. In other words, the one or more base medical images comprise one or more ultrasound images generated using one or more sonography measurement protocols, and the synthetic medical image is a synthetic MRI image.

In an embodiment of the present disclosure, the one or more base imaging techniques comprise one or more base MRI imaging techniques and the target imaging technique is a target MRI imaging technique that differs from the one or more base MRI imaging techniques. In other words, the one or more base medical images are one or more MRI images generated using one or more base MRI measurement protocols, and the synthetic medical image is an MRI image of the target imaging technique.

In an embodiment of the present disclosure, the one or more base medical images comprise one or more T1-weighted MRI images, and the synthetic medical image is a synthetic T2-weighted MRI image.

In an embodiment of the present disclosure, the one or more base medical images comprise one or more T2-weighted MRI images, and the synthetic medical image is a synthetic T1-weighted MRI image.

In an embodiment of the present disclosure, the one or more base medical images comprise one or more diffusion weighted MRI images, and the synthetic medical image is an apparent diffusion coefficient (ADC) map.

In an embodiment of the present disclosure, the one or more base medical images comprise one or more apparent diffusion coefficient (ADC) maps, and the synthetic medical image is a synthetic diffusion weighted MRI image.

In an embodiment of the present disclosure, the one or more base medical images comprise one or more T1-weighted MRI images, and the synthetic medical image is a synthetic FLAIR MRI image.

In an embodiment of the present disclosure, the one or more base medical images comprise one or more FLAIR MRI images, and the synthetic medical image is a synthetic T1-weighted MRI image.

In an embodiment of the present disclosure, the one or more base medical images comprise one or more contrast enhanced images, and the synthetic medical image is a synthetic non-contrast image.

In an embodiment of the present disclosure, the one or more base medical images comprise one or more non-contrast images, and the synthetic medical image is a synthetic contrast-enhanced image.

In an embodiment of the present disclosure, the one or more base medical images comprise one or more non-contrast MRI images, and the synthetic medical image is a synthetic contrast-enhanced MRI image.

In an embodiment of the present disclosure, the one or more base medical images comprise one or more contrast enhanced MRI images, and the synthetic medical image is a synthetic non-contrast MRI image.

In an embodiment of the present disclosure, the one or more base medical images comprise one or more non-contrast CT images, and the synthetic medical image is a synthetic contrast-enhanced CT image.

In an embodiment of the present disclosure, the one or more base medical images comprise one or more contrast enhanced CT images, and the synthetic medical image is a synthetic non-contrast CT image.

In an embodiment of the present disclosure, the one or more base medical images comprise one or more proton density (PD) weighted images, and the synthetic medical image is a synthetic T1-weighted image or a synthetic T2-weighted image.

In an embodiment of the present disclosure, the one or more base medical images comprise one or more T1-weighted images and/or T2-weighted images, and the synthetic medical image is a synthetic proton density (PD) weighted image.

In an embodiment of the present disclosure, the one or more base medical images comprise one or more CT images, and the synthetic medical image is a synthetic bone-enhanced CT image.

In an embodiment of the present disclosure, the one or more base medical images comprise one or more CT images, and the synthetic medical image is a synthetic lung-enhanced CT image.

The synthetic medical image is generated with the help of a trained machine learning model.

Such a "machine learning model", as used herein, may be understood as a computer implemented data processing architecture. The machine learning model can receive input data and provide output data based on that input data and on parameters of the machine learning model (model parameters). The machine learning model can learn a relation between input data and output data through training. In training, parameters of the machine learning model may be adjusted in order to provide a desired output for a given input.

The process of training a machine learning model involves providing a machine learning algorithm (that is the learning algorithm) with training data to learn from. The term "trained machine learning model" refers to the model artifact that is created by the training process. The training data must contain the correct answer, which is referred to as the target. The learning algorithm finds patterns in the training data that map input data to the target, and it outputs a trained machine learning model that captures these patterns.

In the training process, input data are inputted into the machine learning model and the machine learning model generates an output. The output is compared with the (known) target. Parameters of the machine learning model are modified in order to reduce the deviations between the output and the (known) target to a (defined) minimum.

In general, a loss function can be used for training, where the loss function can quantify the deviations between the output and the target.

The aim of the training process can be to modify (adjust) parameters of the machine learning model in order to reduce the loss to a (defined) minimum.

The machine learning model of the present disclosure is or comprises a conditional generative model.

A "generative model" is a type of machine learning model that is designed to learn and generate new data that resembles the training data it was trained on. Generative models capture the underlying distribution of the training data and can generate samples from that distribution.

A "conditional generative model" is a type of generative model that generates data (in this case, synthetic medical images) given certain conditions or constraints. Conditional generative models take additional input in the form of a condition that guides the process of image generation. In general, this condition can be anything that provides some sort of context for the generation process, such as a class label, a text description, another image, or any other piece of information. In the case of the present disclosure, one or more image embeddings are used as the condition.

In an embodiment of the present disclosure, the conditional generative model is or comprises a diffusion model.

Diffusion models focus on modeling the step-by-step evolution of a data distribution from a "simple" starting point to a "more complex" distribution. The underlying concept of diffusion models is to transform a simple and easily sampleable distribution, typically a Gaussian distribution, into a more complex data distribution of interest. This transformation is achieved through a series of invertible operations. Once the model learns the transformation process, it can generate new samples by starting from a point in the simple distribution and gradually "diffusing" it to the desired complex data distribution.

A diffusion model usually comprises a noising model and a denoising model.

The noising model usually comprises a plurality of noising stages. The noising model is configured to receive input data (e.g., an image) and produce noisy data in response to receipt of the input data. The noising model introduces noise to the input data to obfuscate the input data after a number of stages, or "timesteps" *T.* The noising model can be or can include a finite number of steps *T* or an infinite number of steps (*T*→ ∞). The noising model may have the same weights/architectures for all timesteps or different weights/architectures for each timestep. The number of timesteps can be global (i.e., timesteps are the same for all pixels of an image) or local (e.g., each pixel in an image might have a different timestep).

The denoising model is configured to reconstruct the input data from noisy data. The denoising model is configured to produce samples matching the input data after a number of stages.

For example, the diffusion model may include Markov chains at the noising model and/or denoising model. The diffusion models may be implemented in discrete time, e.g., where each layer corresponds to a timestep. The diffusion model may also be implemented in arbitrarily deep (e.g., continuous) time.

Diffusion models can be conceptually similar to a variational autoencoder (VAE) whose structure and loss function provides for efficient training of arbitrarily deep (e.g., infinitely deep) models. The diffusion model can be trained using variational inference, for example.

The diffusion model can be a Latent Diffusion Model (LDM). In such a model, the diffusion approach in the case of an image is not performed in real space (e.g., pixel space or voxel space or doxel space, as the case may be), but in so-called latent space based on a representation of the image, usually a compressed representation (see, e.g., R. Rombach et al.: High-Resolution Image Synthesis with Latent Diffusion Models, arXiv:2112.10752v2).

The diffusion model may be a Denoising Diffusion Probabilistic Model (DDPM). DDPMs are a class of generative models that work by iteratively adding noise to input data (e.g., an image or a compressed representation) and then learning to denoise from the noisy signal to generate new samples (see, e.g., J. Ho et al.: Denoising Diffusion Probabilistic Models, arXiv:2006.11239v2).

The diffusion model may be a Score-based Generative Model (SGM). In SGMs the data is perturbed with random Gaussian noise of various magnitudes. With the gradient of log probability density as score function, samples are generated towards decreasing noise levels and the model is trained by estimating the score functions for noisy data distribution (see, e.g., Y. Song et al.: Score-Based Generative Modeling through Stochastic Differential Equations, arXiv:2011.13456v2).

The diffusion model may be a Denoising Diffusion Implicit Model (DDIM) (see, e.g.: J. Song et al.: Denoising Diffusion Implicit Models, arXiv:2010.02502v4). A critical drawback of DDPMs is that they require many iterations to produce a high-quality sample. For DDPMs, this is because the generative process (from noise to data) approximates the reverse of the forward diffusion process (from data to noise), which could have thousands of steps; iterating over all the steps is required to produce a single sample. DDIMs are implicit probabilistic models that are closely related to DDPMs, in the sense that they are trained with the same objective function. DDIMs allow for much faster sampling while keeping an equivalent training objective. They do this by estimating the addition of multiple Markov chain steps and adding them all at once. DDIMs construct a class of non-Markovian diffusion processes which makes sampling from reverse process much faster. This modification in the forward process preserves the goal of DDPM and allows for deterministically encoding an image to the noise map.

Unlike DDPMs, DDIMs enable control over image synthesis owing to the latent space flexibility (attribute manipulation) (see, e.g., K. Preechakul et al.: Diffusion autoencoders: Toward a meaningful and decodable representation, arXiv:2111.15640v3). With DDIM, it is possible to run the generative process backward deterministically to obtain the noise map x*_{T}*, which represents the latent variable or encoding of a given image x₀. In this context, DDIM can be thought of as an image decoder that decodes the latent code x*_{T}* back to the input image. This process can yield a very accurate reconstruction; however, x*_{T}* still does not contain high-level semantics as would be expected from a meaningful representation.

In an embodiment of the present disclosure, the conditional generative model is or comprises a conditional diffusion model.

In a conditional diffusion model, a condition is used to denoise latent data and reconstruct the input data (see, e.g., P. Dhariwal, A. Nichol: *"Diffusion models beat GANs on image synthesis,"* arXiv:2105.05233v4). One benefit of conditioning the diffusion model with information-rich representations is a more efficient denoising process.

In general, such a condition can be based on a text (e.g., text-to-image), on an image, on audio data, or on other information. In the case of the present disclosure, an image embedding of a medical image is used as a condition for the generation of a synthetic medical image.

The conditional generative model is first trained using training data. The training data is generated based on a plurality of data sets from a plurality of examination objects.

The term "plurality" means more than ten, preferably more than a hundred.

Each data set comprises at least two medical images: a base medical image and a target medical image.

The base medical image is a result of an examination of an examination region of an examination object using one of the base imaging techniques. The target medical image is a result of an examination of the examination region of the examination object using a target imaging technique.

The base imaging technique and the target imaging technique are different imaging techniques.

One or more data sets may comprise more than one base medical image from more than one base imaging techniques, e.g., two or three or four or more than four base medical images. Each of the base medical images is a result of an examination of the examination region of the examination object using one of the base imaging techniques. Each base imaging technique differs from the target imaging technique.

The examination region is usually the same for each data set. The examination object can be a different examination object for each data set; however, it is also possible that the medical images of one or more data sets represent the examination region of the same examination object.

The target medical image serves as input data and target data when training the conditional generative model. In other words, the conditional generative model is configured to reconstruct the target medical image. The reconstructed target medical image is a synthetic medical image.

At least one image embedding of the one or more base medical images serves as a condition for the reconstruction of the target medical image.

In other words, the conditional generative model is configured and trained to generate a reconstructed target medical image based on at least one image embedding of one or more base medical images as a condition.

Generating a reconstructed target medical image usually comprises: inputting the target medical image and the at least one image embedding of the one or more base medical images into the conditional generative model and reconstructing the target medical image using the at least one image embedding of the one or more base medical images as a condition.

It is also possible that the conditional generative model is configured and trained to generate a reconstructed target medical image based on multiple base medical images, e.g., two or three or four or five or six or seven or more than seven base medical images.

For example, it is possible that the target medical image represents an examination region of an examination object as a result of an examination of the examination region using the target imaging technique; the conditional generative model is configured and trained to reconstruct the target medical image; the generation of the reconstructed target medical image is based on at least one image embedding used as condition: the at least one image embedding is based on multiple base medical images. Each base medical images of the multiple base medical images is a result of an examination of the examination region of the examination object using a base imaging technique.

As described, one or more image embeddings of the one or more base medical images serve as a condition for the reconstruction of the target medical image. Therefore, an image embedding is generated from each base medical image.

An "image embedding" is a numerical representation of an image that captures the salient features of the image.

An image embedding usually captures the meaning or semantics of the medical image. It aims to encode the high-level information and concepts present in the medical image, allowing machines to understand and reason about the content of the medical image. For example, information about morphologies, colours, structures and/or relationships between structures contained in the medical image can be agglomerated in an image embedding of the medical image.

The image embedding can be a vector or a matrix or a tensor or another arrangement of numbers.

An image embedding can be obtained, for example, by passing the medical image through a pre-trained machine learning model and then extracting the output of one layer of the machine learning model.

The machine learning model for generating image embeddings can be or comprise a (pre-trained) convolutional neural network, for example.

Convolutional neural networks (CNNs) are frequently used for generating image embeddings. These artificial neural networks consist of multiple layers that progressively extract features at different levels of abstraction, capturing both low-level details and higher-level semantic concepts. The CNN can be part of a classifier or autoencoder, for example.

In an embodiment of the present disclosure, the image embeddings are generated with an encoder of an optionally pre-trained autoencoder.

An "autoencoder" is a type of neural network architecture that is primarily used for unsupervised learning and dimensionality reduction. It may be designed to learn a compressed representation of the input data and then reconstruct the original data from this compressed representation (the embedding). An autoencoder usually comprises two main components: an encoder and a decoder. The encoder takes the input data and maps it to a lower-dimensional latent space representation, also known as the embedding. The decoder then takes this embedding and reconstructs the original input data from it. The objective of an autoencoder is to minimize the reconstruction error, which encourages the model to learn a compressed representation that captures the most salient features of the input data.

An autoencoder is often implemented as an artificial neural network that comprises a convolutional neural network (CNN) to extract features from medical images as input data. An example of such an autoencoder is the U-Net (see, e.g., O. Ronneberger et al.: U-net: Convolutional networks for biomedical image segmentation, International Conference on Medical image computing and computer-assisted intervention, 234-241, Springer, 2015, DOI: 10.1007/978-3-319-24574-4_28). Further examples of autoencoders are sparse autoencoders, denoising autoencoders, variational autoencoders (VAEs), and generative adversarial networks (GANs). The autoencoder can be (pre-)trained based on (non-annotated) images. The images used for pre-training can be medical images, but they can also be other images or include other images.

Autoencoders can be (pre-)trained using a self-supervised learning approach, meaning they do not require labeled data for training.

The term "pre-trained" refers to a model that has been trained on a large dataset in advance and is made available for use by others. Pre-training involves training a model on a task or dataset that is typically different from the specific task for which the model will be used later. The pre-training process involves exposing the model to a vast amount of data and allowing it to learn general patterns and representations from that data. This enables the model to capture common features and structures that are useful across various related tasks. The model is typically trained using unsupervised or self-supervised learning methods, where the labels or annotations are generated automatically or do not require human intervention. Once the pre-training phase is complete, the model's weights and parameters can be saved and made publicly available. Other researchers or practitioners can then use this pre-trained model as a starting point for their own tasks. By leveraging the pre-trained model, they can benefit from the learned representations and potentially achieve better performance even with limited training data.

In another embodiment of the present disclosure, the image embeddings are generated with the help of a pre-trained vision transformer.

Transformers are widely used for various natural language processing tasks, including machine translation, text summarization, sentiment analysis, and more.

At the core of the transformer model is the transformer architecture, which relies heavily on self-attention mechanisms to process sequential data efficiently. Unlike traditional recurrent neural networks (RNNs) or convolutional neural networks (CNNs), transformers do not employ recurrent or convolutional operations. Instead, they use self-attention mechanisms to capture contextual relationships between words or tokens in a sequence. This enables transformers to model long-range dependencies effectively, allowing them to produce more accurate predictions.

The transformer architecture consists of two main components: the encoder and the decoder. The encoder processes the input sequence, modeling its contextual relationships, while the decoder generates the output sequence based on the encoded information. Both the encoder and decoder are composed of multiple layers of self-attention mechanisms and feed-forward neural networks. The self-attention mechanism allows the model to focus on different parts of the input sequence while considering the dependencies between tokens.

Transformers have significantly contributed to advancements in machine learning, particularly in natural language processing tasks. Their ability to capture contextual information efficiently has resulted in state-of-the-art performance on various benchmarks and has paved the way for numerous applications in the field (see, e.g., T. Lin et al.: A survey of transformers, AI Open, Volume 3, 2022, Pages 111-132).

Transformers have been applied to images (vision transformer).

In a vision transformer, the input image is divided into a sequence of patches, which are then flattened and fed into a series of transformer layers. These transformer layers consist of self-attention modules and feed-forward neural networks. The self-attention mechanism allows the model to capture the relationships between different patches and learn global context information, while the feed-forward networks enable non-linear transformations (see, e.g., S. Khan et al.: Transformers in Vision: A Survey, arXiv:2101.01169v5).

The key advantage of vision transformers is their ability to model long-range dependencies and capture global context, which is crucial for understanding complex visual patterns and relationships.

Like the autoencoder, the vision transformer is preferably pre-trained. The vision transformer may have been pre-trained in a supervised, self-supervised or unsupervised approach.

The vision transformer may have been pre-trained in a DINO approach. DINO (self-DIstillation with NO labels) is a self-supervised learning method specifically designed to improve the performance of vision transformers in image classification tasks (see, e.g., M. Caron et al.: Emerging Properties in Self-Supervised Vision Transformers, arXiv:2104.14294v2).

"Self-supervised learning" is a type of machine learning paradigm where a model is trained to learn from the data itself, without the need for human-labeled annotations. Instead of relying on external labels provided by humans, the model generates its own supervisory signals from the input data, making it a form of unsupervised learning.

In traditional self-supervised learning, a model is trained on a pretext task, where the labels are generated from the input data itself without requiring human annotations. The model learns to predict certain properties or relationships within the data, which in turn helps it to learn meaningful representations. These representations can then be transferred to downstream tasks.

DINO introduces a novel approach to self-supervised learning for vision transformers by leveraging two main components: clustering and distillation. Initially, the model is trained to cluster the augmented views of the input data. This clustering helps the model to discover semantically similar instances within the dataset. Then, a distillation process is performed, where the model learns to transfer knowledge from a teacher network to a student network. The teacher network provides soft targets, or guidance, to the student network, which helps improve the student's performance. By combining clustering and distillation, DINO enables the model to learn more robust and discriminative representations, leading to better generalization and performance on downstream tasks such as image classification.

In another embodiment of the present disclosure, the vision transformer is pre-trained using a DiNOv2 approach. DiNOv2 (DIscriminative NOise Contrastive Learning V2) is another self-supervised approach for training vision transformers (see, e.g., M. Oquab et al.: DINOv2: Learning Robust Visual Features without Supervision, arXiv:2304.07193v1).

In another embodiment of the present disclosure, the image embeddings are embeddings generated with the help of an image encoder of a pre-trained CLIP model.

CLIP (Contrastive Language-Image Pretraining) is a framework in the field of machine learning that combines natural language processing and computer vision to understand and generate multimodal representations of images and text. CLIP encodes text and image in same embedding space (see, e.g., A. Radford et al.: Learning Transferable Visual Models From Natural Language Supervision, arXiv:2103.00020v1).

CLIP is (pre-)trained in a self-supervised manner, where large-scale datasets of images and their associated text are used to learn joint representations. The model is trained to associate images and their textual descriptions by maximizing their similarity in the learned embedding space. This allows CLIP to understand and reason about images and text in a shared semantic space. The base model uses a ViT-L/14 transformer architecture as an image encoder and uses a masked self-attention transformer as a text encoder. These encoders are trained to maximize the similarity of (image, text) pairs via a contrastive loss.

The key innovation of CLIP is its ability to generalize across different domains and tasks. By training on a diverse range of image and text pairs, CLIP can perform a variety of tasks without task-specific fine-tuning. For example, CLIP can perform zero-shot image classification, where it can classify images into categories it has never seen during training, solely based on textual descriptions.

In a preferred embodiment, the image encoder of a pre-trained CLIP model is used which was pre-trained on medical images, such as BiomedCLIP (see, e.g., S. Zhang et al.: Large-Scale Domain-Specific Pretraining for Biomedical Vision-Language Processing, arXiv:2303.00915v1).

However, the models and training procedures listed here are only examples; the image embeddings can also be generated in other ways.

It is also possible to generate more than one image embedding of a medical image (e.g., two, or three or four or any other number).

It is possible to generate different image embeddings from a medical image (e.g. using different embedding methods).

If multiple image embeddings are available, these can be combined into a single image embedding, e.g. through concatenation, average pooling, attention-weighted pooling and/or other combination methods.

Image embeddings can be generated before training the conditional generative model and then saved. Image embeddings can also be generated during training of the conditional generative model.

Generating an image embedding of a medical image usually comprises: inputting the medical image into an image encoder, and receiving the image embedding of the medical image as an output of the image encoder.

Training the conditional generative model usually involves the following steps:
For each data set:
- inputting the target medical image and the at least one image embedding of the one or more base medical images into the conditional generative model, wherein the at least one image embedding of the one or more base medical images is used as a condition in the generation of the reconstructed target medical image,
- receiving a reconstructed target medical image as an output of the conditional generative model,
- determining a deviation between the target medical image and the reconstructed target medical image, e.g. by means of a loss function,
- reducing the deviation by modifying model parameters of the conditional generative model.

The training of the conditional generative model can be ended when a stop criterion is met. Such a stop criterion can be for example: a predefined maximum number of training steps/cycles/epochs has been performed, deviations between output data and target data can no longer be reduced by modifying the model parameters, a predefined minimum of the loss function is reached, and/or an extreme value (e.g., maximum or minimum) of another performance value is reached.

The trained conditional generative model can be saved, transferred to a separate computer system and/or used to generate a synthetic medical image.

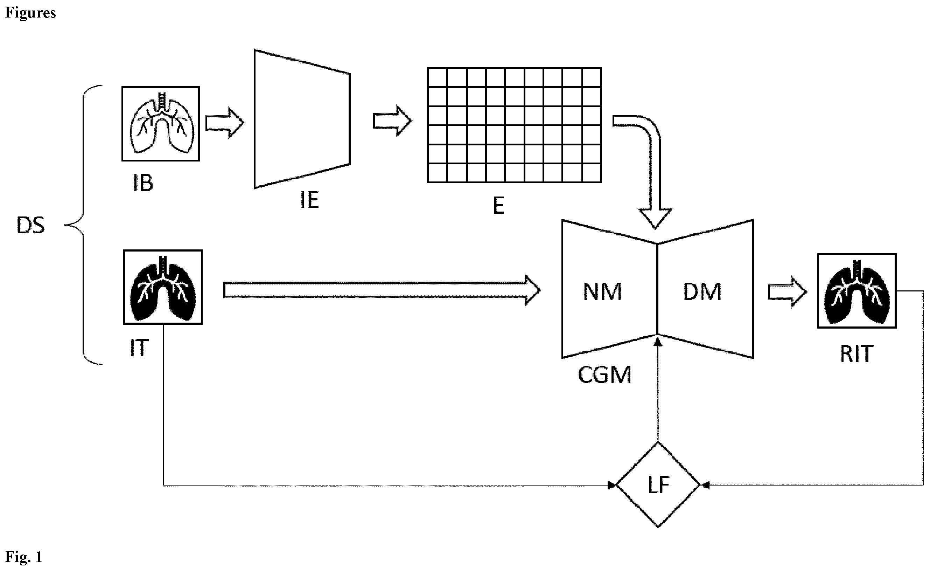

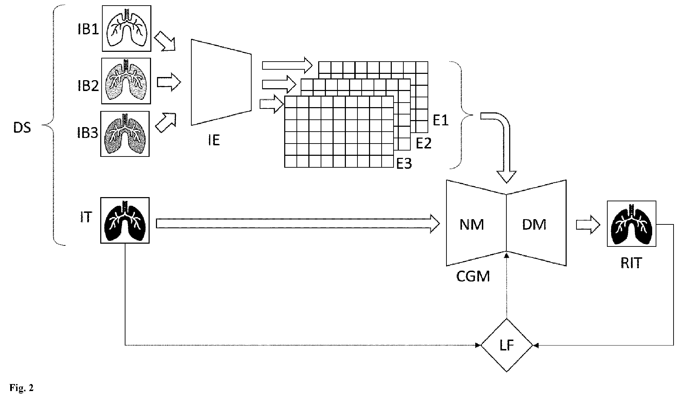

The training is shown schematically in Fig. 1 and Fig. 2 in the form of examples.

Fig. 1 shows schematically an embodiment of the training of the conditional generative model.

In a first step, a plurality of data sets is received. For the sake of clarity, only one data set DS is shown in Fig. 1.

Each data set DS represents the examination region of an examination object.

In the example shown in Fig. 1, the examination object is a human being and the examination region comprises the human lung.

It should be noted that in Figures 1 to 11, the human lung was chosen as an example of an examination region of an examination object. The depicted human lung is just a representation of any part of any examination object. In other words, the human lung shown in Figures 1 to 11 can also be another part of an examination object, e.g. a liver, kidney, heart, lung, brain, stomach, bladder, prostate, intestine, thyroid, eye, breast or a part of said parts or another part of the body of a mammal (for example a human).

Each data set DS comprises at least two medical images, a base medical image IB and a target medical image IT.

The base medical image IB is a result of an examination of the examination region of the examination object using a imaging technique.

The target medical image IT is a result of an examination of the examination region of the examination object using a target imaging technique.

The base imaging technique and the target imaging technique are different imaging techniques.

The base medical image IB is inputted to an image encoder IE. The image encoder IE generates an image embedding E based on the base medical image IB.

The target medical image IT and the image embedding E are inputted to the conditional generative model CGM. The conditional generative model CGM is configured and trained to generate a reconstructed target medical image RIT based on the target medical image IT and the image embedding E of the base medical image IB. The image embedding E of the base medical image IB is used as a condition for generating the reconstructed target medical image RIT.

The conditional generative model CGM comprises a noising model NM and a denoising model DM.

The noising model NM is configured to receive input data (i.e., the target medical image IT) and generate noisy data in response to receipt of the input data. The noising model introduces noise to the input data to obfuscate the input data after a number of stages.

The denoising model DM is configured to reconstruct the input data (i.e., the target medical image IT) from noisy data. The denoising model DM is configured to produce samples matching the input data after a number of stages.

It should be noted that the diffusion approach can be performed in real space (e.g., pixel space or voxel space or doxel space, as the case may be) or in latent space.

A loss function LF is used to quantify deviations between the target medical image IT and the reconstructed target medical image RIT.

The deviations can be reduced by modifying model parameters of the conditional generative model CGM.

The process shown in Fig. 1 is carried out for a plurality of data sets until a stop criterion is reached.

If image embeddings are used as conditions in the reconstruction of a medical image, it is possible to mask part of the image embeddings. By masking, the conditional generative model is forced to compensate for the missing information. It learns to extract global information from local information.

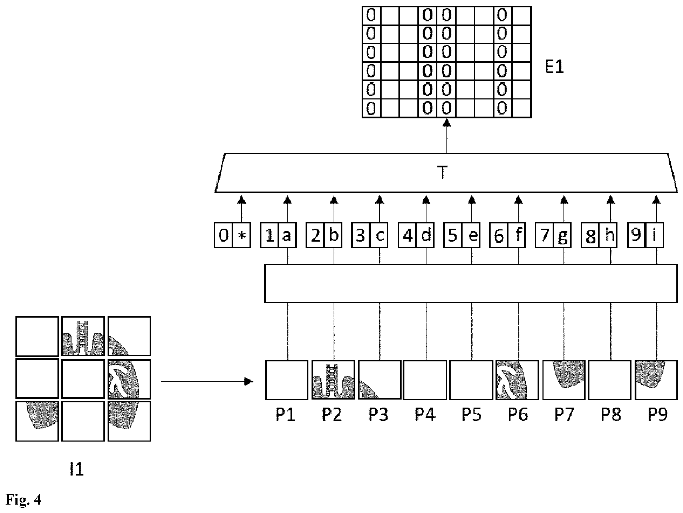

The parts that are masked can be selected randomly or specifically. The proportion of masked parts can be constant or can be varied. Examples of masking are shown in Figures 4, 6, 7, and 8.

Fig. 2 shows schematically another embodiment of the training of the conditional generative model.

The training shown in Fig. 2 differs from the training shown in Fig. 1 in that image embeddings of several images are used as conditions for reconstruction.

In a first step, a plurality of data sets is received. For the sake of clarity, only one data set DS is shown in Fig. 2.

Each data set DS represents the examination region of an examination object.

In the example shown in Fig. 2, the examination object is a human being and the examination region comprises the lung of the human being.

The data set DS comprises four medical images, three base medical images IB1, IB2 and IB3, and one target medical image IT.

The target medical image IT is the image which is reconstructed.

The first base medical image IB1 is a result of an examination of the examination region of the examination object using a first base imaging technique.

The second base medical image IB2 is a result of an examination of the examination region of the examination object using a second base imaging technique.

The third base medical image IB3 is a result of an examination of the examination region of the examination object using a third base imaging technique.

The first base imaging technique, the second base imaging technique, and the third base imaging technique are usually different imaging techniques.

The target medical image IT is a result of an examination of the examination region of the examination object using a target imaging technique. The target imaging technique differs from any of the base imaging techniques.

An image embedding is generated from each of the base medical images IB1, IB2 and IB3 using the image encoder IE. A first image embedding E1 is generated from the first base medical image IB1; a second image embedding E2 is generated from the second base medical image IB2; a third image embedding E3 is generated from the third base medical image IB3.

The target medical image IT is fed to the conditional generative model CGM. The conditional generative model CGM generates a reconstructed target medical image RIT. The embeddings E1, E2 and E3 are used as conditions when generating the reconstructed target medical image RIT.

The image embeddings E1, E2 and E3 can be combined into one embedding. This is generally the case and does not only apply to the training shown in Fig. 2: if several image embeddings are available as conditions for reconstruction, they can be combined into one embedding, the combined image embedding.

There are several options to combine multiple image embeddings into one embedding.

Multiple image embeddings can be combined into one embedding by concatenation, i.e., by sticking the image embeddings end-to-end. If the image embeddings are vectors, a longer vector or a matrix can be created by concatenation. If the image embeddings are matrices, a matrix with more rows or columns or a tensor can be created by concatenation. This method (concatenation) retains all original information but may result in a high-dimensional conditional input.

Multiple image embeddings can be combined into one embedding by summation, i.e., by summing the image embeddings together elementwise.

Multiple image embeddings can be combined into one embedding by performing a principal component analysis (PCA), and generating an embedding based on identified principle components.

Multiple image embeddings can be combined into one embedding by averaging, i.e., by taking the element-wise mean (e.g., arithmetic means) of the image embeddings.

Multiple image embeddings can be combined into one embedding by weighted averaging. Weighted averaging is similar to averaging but each image embedding and/or each dimension of an image embedding is assigned a weight before averaging. The weights can be determined based on the importance of each image embedding and/or dimension, for example. The weights can be learned, for example. It is possible that the image encoder or a downstream artificial neural network that combines the image embeddings is included in the training of the conditional generative model and that the attention weights are learned during the training.

It is possible that the image encoder is or comprises a CNN and that the parameters of the CNN are learned during the training of the conditional generative model. For example, the CNN can perform a 1D convolution over the elements of the image embeddings and thus merge the image embeddings into a single embedding.

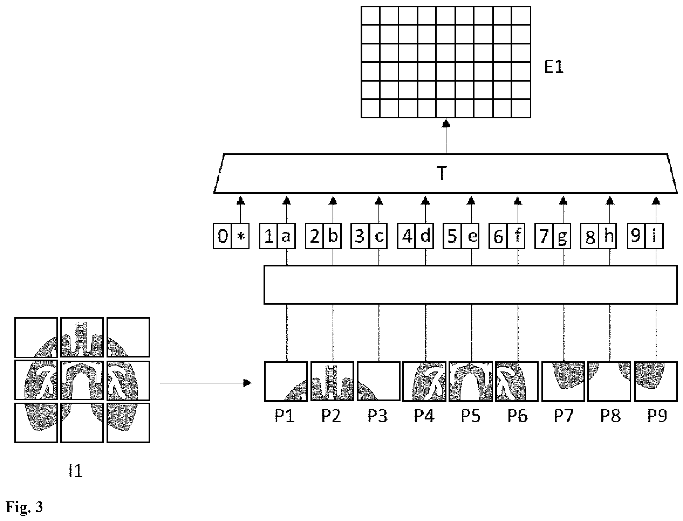

Figs. 3 to 8 show schematic examples of the generation of image embeddings that can be used as conditions for the reconstruction of a medical image. In the examples shown, the image encoder is based on a vision transformer. It should be noted that the image encoder of the present disclosure is not limited to vision transformer.

Fig. 3 shows a schematic example of how an image embedding is generated from a medical image.

The medical image I1 is split into fixed-size patches P1 to P9. Patch embeddings *a* to *i* are generated by flattening the patches P1 to P9 and mapping the flattened patches by linear projection to a dimension corresponding to the input dimension of the transformer T. Position embeddings 1 to 9 are added to the patch embeddings to retain positional information. The resulting sequence serves as input to the transformer T.

In the example shown, the sequence is preceded by an embedding * with the position 0, which can contain global information about the medical image I1, e.g. at what time and/or in which phase of an examination it was generated and/or which examination region it shows and/or the modality of the medical image and/or the measurement conditions under which it was generated.

It is possible that other/further embeddings are added to the sequence. For example, one or more learnable input tokens can be added, that the conditional generative model can use as "registers" (see, e.g., T. Darcet et al.: Vision Transformers Need Registers, arXiv:2309.16588v1).

The transformer T generates an image embedding E1 from the sequence.

This process for generating image embeddings is known and described, for example, in: A. Dosovitsky et al.: An Image is Worth 16x16 Words: Transformers for Image Recognition at Scale, arXiv:2010.11929v2).

Fig. 4 shows a schematic example of how parts of an image embedding can be masked. In the example shown, the patches P1, P3, P4 and P8 are masked. The grey values of the masked patches can be set to zero, for example. This also sets the corresponding image tokens of the image embedding E1 to zero. However, masking does not have to be performed at patch level; it is also possible to perform masking at image token level.

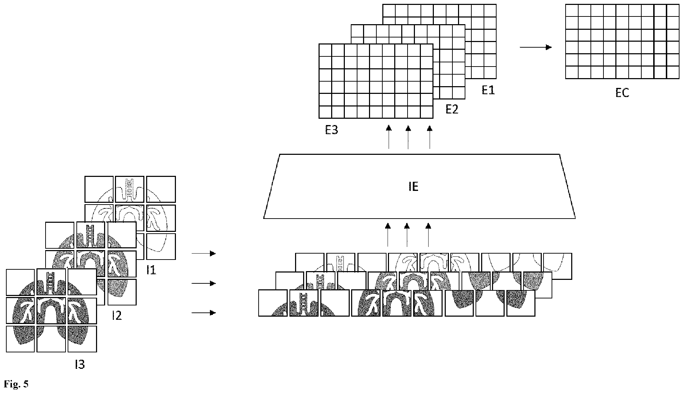

Fig. 5 shows a schematic example of the generation of several image embeddings and the combination of the image embeddings into a single image embedding.

Fig. 5 shows three medical images 11, 12, and 13.

Patches are generated from each of the three images and fed to the image encoder IE. The image encoder IE generates a first image embedding E1 based on the patches of the first medical image I11, a second image embedding E2 based on the patches of the first medical image 112, and a third image embedding E3 based on the first medical image 113. The image embeddings can be generated as described in relation to Fig. 4.

The image embeddings E1, E2 and E3 are combined into a single image embedding EC. This combined image embedding EC can be used as a condition when reconstructing a medical image (e.g., when generating the reconstructed target medical image RIT in Fig. 2).

The image embeddings E1, E2 and E3 can be combined into the single image embedding EC in various ways, e.g., by concatenation, by summing the image embeddings together elementwise, by performing a principal component analysis (PCA) and generating an embedding based on principle components, by taking the element-wise mean (e.g., arithmetic means) of the image embeddings, by taking the element-wise maximum (e.g., arithmetic means) of the image embeddings, by weighted averaging, and/or by using a trainable machine learning model (such as an artificial neural network).

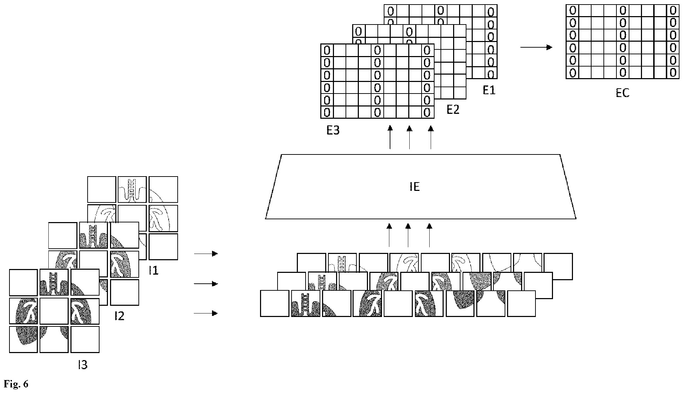

Patches and/or image tokens can also be masked in the case of multiple image embeddings. Fig. 6 shows an example of masking patches and/or image tokens. As shown in Fig. 6, for example, patches representing the same sub-regions of the examination region can be masked randomly or according to defined rules. When combining the image embeddings E1, E2 and E3 to form the combined image embedding EC by means of summation, average pooling or max pooling, the corresponding image tokens of the combined image embedding EC would also assume the value zero.

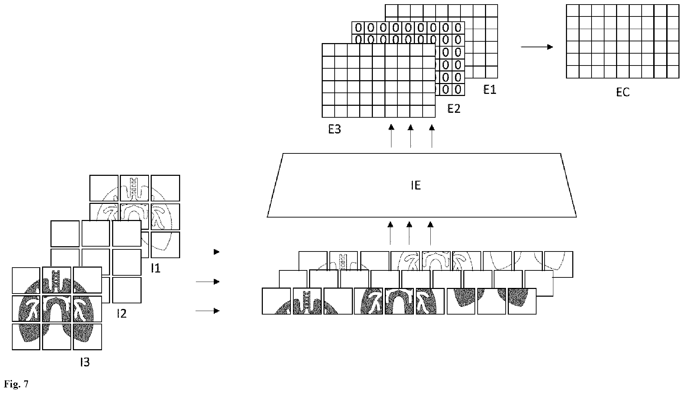

Fig. 7 shows another example of masking patches and/or image tokens. In the example shown in Fig. 7, individual medical images are masked, in this case medical image 112. If a medical image represents the examination region of an examination object as a result of an examination using a certain imaging technique, information about how the examination region looks like when using that certain imaging technique is missing when reconstructing a medical image. The conditional generative model is forced to compensate for the missing information from images representing the examination region using other imaging techniques. This would make the conditional generative model invariant to the imaging techniques used to generate one or more images it receives during inference.

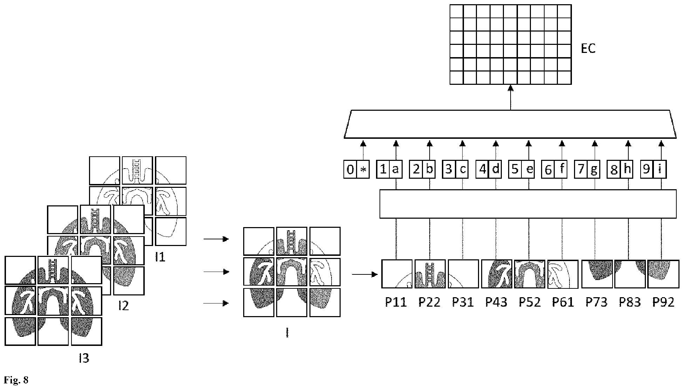

Fig. 8 shows another example of generating an image embedding based on multiple medical images. In the example shown in Fig. 8, the medical images 11, I2 and I3 are divided into patches. Thereby, three sets of patches are generated. A defined portion of each set is used to create the image embedding EC so that each sub-region of the examination region is represented once by a patch. In other words, a new image I is generated from the patches of images 11, 12, and I3, which is composed of patches of the images I1, 12, and I3 in such a way that each sub-region of the examination region is represented once by a patch. In this example, the new image I is composed of the patches P11, P22, P31, P43, P52, P61, P73, P83 and P92, whereby the first digit indicates the position of the patch, and the second digit indicates the number of the image from which it originates.

The proportion of patches per medical image and/or which patches from which medical image are used to generate the new image I can vary in each training cycle.

As with the approach in Fig. 7, the approach in Fig. 8 also results in the conditional generative model becoming invariant to the amounts of contrast agents used.

As described, the trained conditional generative model can be used to generate a synthetic medical image.

The use of a trained model is also referred to as inference.

In a first step, at least one medical image of a new examination object is received.

The term "new" means that usually no data from the new examination object was used to train the conditional generative model. However, it is possible that data from the new examination object was used to train the conditional generative model. The new examination object is usually of the same type as the examination objects that represent the training data. For example, if the conditional generative model was trained with training data representing humans, the new examination object is usually also a human.

The term "receiving" includes both retrieving one or more medical images and receiving one or more medical images that are transmitted, for example, to the computer system of the present disclosure. The one or more medical images may be received from an MRI scanner, a CT scanner or any other device for the generation of medical images, as the case may be. The one or more medical images may be read from one or more data storage devices.

Each medical image of one or more medical images is a result of an examination of the examination region of the new examination object using one of the base imaging techniques.

Based on the one or more medical images at least one image embedding is generated using the image encoder.

Based on the at least one image embedding as a condition, a synthetic medical image is generated using the conditional generative model.

For example, if the trained conditional generative model is a conditional diffusion model with a noising model and a denoising model, the noising model can be discarded, and noisy data can be entered into the denoising model. The denoising model then generates the synthetic medical image step by step from the noisy data using the at least one image embedding as a condition.

The synthetic medical image represents the examination region of the new examination object as a result of an examination of the examination region using the target imaging technique.

The synthetic medical image can be outputted (e.g., displayed on a monitor or printed using a printing device) and/or stored in a data storage and/or transmitted to a separate computer system.

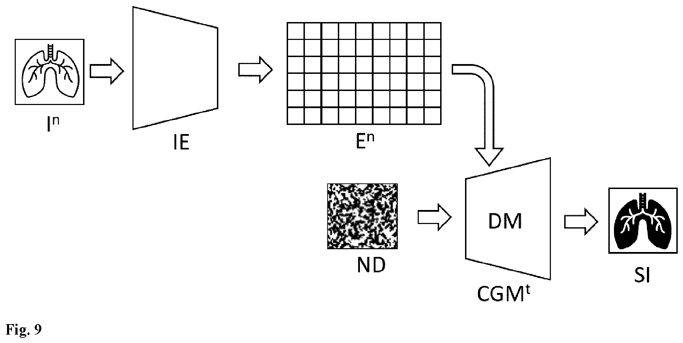

Figs. 9 to 11 show schematically and by way of example the generation of a synthetic medical image.

Fig. 9 shows an embodiment for generating a synthetic medical image based on one medical image.

A trained conditional generative model CGM^{t} is used to generate the synthetic medical image SI. The trained conditional generative model CGM^{t} may have been trained as described in relation to Fig. 1.

A medical image Iⁿ of a new examination object is received. The medical image Iⁿ is a result of an examination of the examination region of the new examination object using one of the base imaging techniques.

The medical image Iⁿ is fed to the image encoder IE. The image encoder IE generates an image embedding Eⁿ based on the medical image Iⁿ. Noisy data ND is provided. The noisy data ND is fed to the denoising model DM of the trained conditional genetic model CGM^{t}. Similarly, the image embedding Eⁿ is fed into the trained conditional generative model CGM^{t}. The trained conditional generative model CGM^{t} generates the synthetic medical image SI based on the noisy data and based on the image embedding Eⁿ as a condition. The synthetic medical image SI represents the examination region of the new examination object as a result of an examination of the examination region using the target imaging technique.

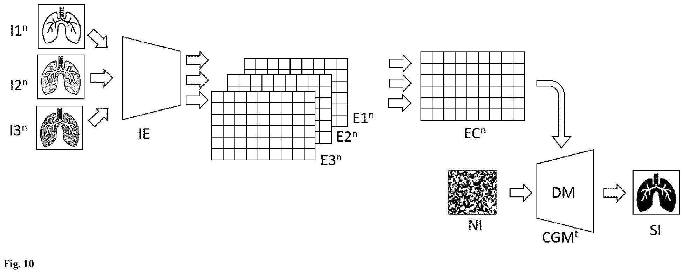

Fig. 10 shows an embodiment for generating a synthetic medical image based on several medical images.

A trained conditional generative model CGM^{t} is used to generate the synthetic medical image SI. The trained conditional generative model CGM^{t} may have been trained as described in relation to Fig. 2.

In the example shown in Fig. 10, three medical images of a new examination object are received, a first medical image I1ⁿ, a second medical image I2ⁿ, and a third medical image I3ⁿ.

The first medical image I1ⁿ is a result of an examination of the examination region of the new examination object using a first base imaging technique. The second medical image I2ⁿ is a result of an examination of the examination region of the new examination object using a second base imaging technique. The third medical image I3ⁿ is a result of an examination of the examination region of the new examination object using a third base imaging technique.

An image embedding is generated from each medical image using the image encoder IE. A first image embedding E1ⁿ is generated based on the first medical image I1ⁿ, a second image embedding E2ⁿ is generated based on the second medical image I2ⁿ, and a third image embedding E3ⁿ is generated based on the third medical image I3ⁿ.

The image embeddings E1ⁿ, E2ⁿ and E3ⁿ are combined into a combined image embedding ECⁿ. Combining is preferably carried out in the same way as when training the conditional generative model and as described in relation to Figures 2 and 5.

The combined image embedding ECⁿ is used as condition for generating the synthetic medical image SI.

Noisy data ND is provided. The noise data ND is fed to the denoising model DM of the trained conditional genetic model CGM^{t}. Similarly, the combined image embedding ECⁿ is fed into the trained conditional generative model CGM^{t}. The trained conditional generative model CGM^{t} generates the synthetic medical image SI based on the noisy data and based on the combined image embedding ECⁿ. The synthetic medical image SI represents the examination region of the new examination as a result of an examination of the examination region using the target imaging technique.

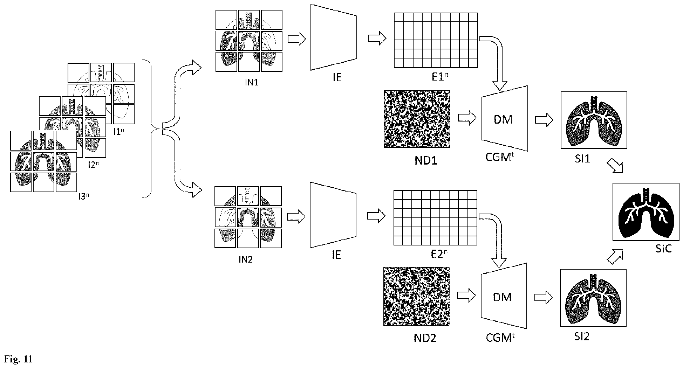

If there were different ways to combine multiple image embeddings into a combined image embedding during training of the conditional generative model, multiple combined image embeddings can be generated during inference, and a different synthetic medical image can be generated based on each combined image embedding. The different synthetic medical images generated in this manner may be combined into a single synthetic medical image, e.g., by element-wise averaging or other method. This also applies analogously to the case shown in Fig. 8, in which a new medical image I is generated based on the medical images I1, 12, and I3. This is shown schematically as an example in Fig. 11.

Fig. 11 shows another embodiment for generating a synthetic medical image based on several medical images.

In a first step, three medical images I1ⁿ, I2ⁿ, and I3ⁿ are received. Each medical image represents the examination region of a new examination object.

The first medical image I1ⁿ is a result of an examination of the examination region of the new examination object using a first base imaging technique. The second medical image I2ⁿ is a result of an examination of the examination region of the new examination object using a second base imaging technique. The third medical image I3ⁿ is a result of an examination of the examination region of the new examination object using a third base imaging technique.

Each medial image is divided into a number of patches.

There are various ways to combine the patches of the three images I1ⁿ, I2ⁿ, and I3ⁿ into a new image. In the example shown in Fig. 11, two possibilities are shown, i.e. two new images IN1 and IN2 are generated based on the patches. However, it is also possible that more than two new images are generated, e.g. three or four or more than four.

The new images IN1 and IN2 have the property that each sub-region of the examination region is represented by a patch of one of the images I1ⁿ, I2ⁿ, and I3ⁿ.

A first image embedding E1ⁿ is generated based on the first new image IN1 using the image encoder IE. A second image embedding E2ⁿ is generated based on the second new image IN2 using the image encoder IE.

First noisy data ND1 is provided. The first noisy data ND1 is fed to the denoising model DM of the trained conditional genetic model CGM^{t}. The trained conditional generative model CGM^{t} generates a first synthetic medical image SI1 based on the first noisy data ND1 using the first image embedding E1ⁿ as a condition.

Similarly, second noisy data ND2 is provided. The second noisy data ND2 is fed to the denoising model DM of the trained conditional genetic model CGM^{t}. The trained conditional generative model CGM^{t} generates a second synthetic medical image SI2 based on the second noisy data ND2 using the second image embedding E2ⁿ as a condition.

The synthetic medical images SI1 and SI2 represent the examination region of the new examination object as a result of an examination of the examination region using the target imaging technique.

The synthetic medical images SI1 and SI2 are combined to obtain a combined synthetic medical image SIC.

The combined synthetic image SIC can be generated from the first synthetic image SI1 and the second synthetic image SI2 by averaging element by element, for example.

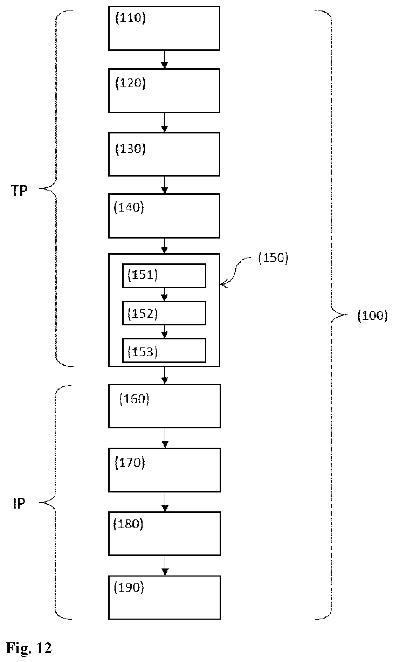

Fig. 12 shows an embodiment of the computer-implemented method of the present disclosure in the form of a flow chart.

The method (100) comprises the steps:
(110) providing a plurality of data sets of a plurality of examination objects, each data set comprising (i) one or more base medical images of one or more base imaging techniques and (ii) a target medical image of a target imaging technique, wherein each base medical image is a result of an examination of an examination region of an examination object using one of the base imaging techniques, and the target medical image is a result of an examination of the examination region of the examination object using the target imaging technique,
(120) providing an image encoder, wherein the image encoder is configured and trained to generate an image embedding based on one or more medical images,
(130) for each data set: generating at least one image embedding of the one or more base medical images using the image encoder,
(140) providing a conditional generative model, wherein the conditional generative model is configured to generate a reconstructed medical image based on a medical image, a condition and model parameters,
(150) training the conditional generative model, wherein the training comprises, for each data set:
   (151) generating a reconstructed target medical image based on the target medical image and the at least one image embedding of the one or more base medical images, wherein the condition in the generation of the reconstructed target medical image is based on the at least one image embedding of the one or more base medical images,
   (152) determining a deviation between the target medical image and the reconstructed target medical image,
   (153) reducing the deviation by modifying model parameters of the conditional generative model,
(160) receiving one or more medical images of a new examination object, wherein each medical image is a result of an examination of the examination region of the new examination using one of the base imaging techniques,
(170) generating at least one image embedding based on the one or more medical images of the new examination object using the image encoder,
(180) generating a synthetic medical image using the trained conditional generative model, wherein the condition in the generation of the synthetic medical image is based on the at least one image embedding of the new examination object,
(190) outputting and/or storing the synthetic medical image and/or transmitting the synthetic medical image to a separate computer system.

The computer-implemented method of the present disclosure can be divided into a training phase and an inference phase.

In the example shown in Fig. 12, the training phase TP comprises steps (110) to (153) and the inference phase IP comprises steps (160) to (190).

The operations in accordance with the teachings herein may be performed by at least one computer system specially constructed for the desired purposes or general-purpose computer system specially configured for the desired purpose by at least one computer program stored in a typically non-transitory computer readable storage medium.

A "computer system" is a system for electronic data processing that processes data by means of programmable calculation rules. Such a system usually comprises a "computer", that unit which comprises a processor for carrying out logical operations, and also peripherals.

In computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the invention.

The term "non-transitory" is used herein to exclude transitory, propagating signals or waves, but to otherwise include any volatile or non-volatile computer memory technology suitable to the application.

The term "computer" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer or processor. The term processor includes a single processing unit or a plurality of distributed or remote such units.

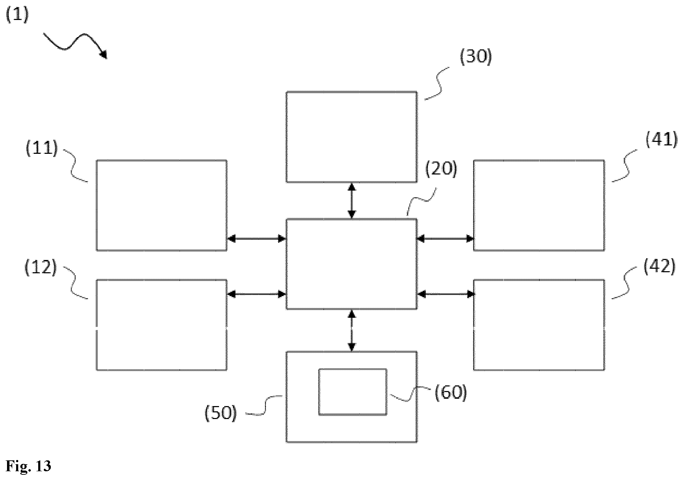

Fig. 13 illustrates a computer system (1) according to some example implementations of the present disclosure in more detail.

Generally, a computer system of exemplary implementations of the present disclosure may be referred to as a computer and may comprise, include, or be embodied in one or more fixed or portable electronic devices. The computer may include one or more of each of a number of components such as, for example, a processing unit (20) connected to a memory (50) (e.g., storage device).

The processing unit (20) may be composed of one or more processors alone or in combination with one or more memories. The processing unit (20) is generally any piece of computer hardware that is capable of processing information such as, for example, data, computer programs and/or other suitable electronic information. The processing unit (20) is composed of a collection of electronic circuits some of which may be packaged as an integrated circuit or multiple interconnected integrated circuits (an integrated circuit at times more commonly referred to as a "chip"). The processing unit (20) may be configured to execute computer programs, which may be stored onboard the processing unit (20) or otherwise stored in the memory (50) of the same or another computer.

The processing unit (20) may be a number of processors, a multi-core processor or some other type of processor, depending on the particular implementation. For example, it may be a central processing unit (CPU), a field programmable gate array (FPGA), a graphics processing unit (GPU) and/or a tensor processing unit (TPU). Further, the processing unit (20) may be implemented using a number of heterogeneous processor systems in which a main processor is present with one or more secondary processors on a single chip. As another illustrative example, the processing unit (20) may be a symmetric multi-processor system containing multiple processors of the same type. In yet another example, the processing unit (20) may be embodied as or otherwise include one or more ASICs, FPGAs or the like. Thus, although the processing unit (20) may be capable of executing a computer program to perform one or more functions, the processing unit (20) of various examples may be capable of performing one or more functions without the aid of a computer program. In either instance, the processing unit (20) may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory (50) may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium or data memory. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display (screen) may be configured to present or otherwise display information to a user, suitable examples of which include a liquid crystal display (LCD), light-emitting diode display (LED), plasma display panel (PDP) or the like. The user input interface(s) (11) may be wired or wireless and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions (60) may be stored in memory (50) and executed by processing unit (20) that is thereby programmed, to implement functions of the systems, subsystems, tools and their respective elements described herein. As will be appreciated, any suitable program code instructions (60) may be loaded onto a computer or other programmable apparatus from a computer-readable storage medium to produce a particular machine, such that the particular machine becomes a means for implementing the functions specified herein. These program code instructions (60) may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions (60) may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions (60) may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions (60) may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code instructions (60) stored in the memory (50). It will also be understood that one or more functions, and combinations of functions, may be implemented by special purpose hardware-based computer systems and/or processing circuitry which perform the specified functions, or combinations of special purpose hardware and program code instructions.

The computer system of the present disclosure may be in the form of a laptop, notebook, netbook, and/or tablet PC; it may also be a component of an MRI scanner, a CT scanner, an ultrasound diagnostic machine or any other device for the generation and/or processing of medical images.

In another aspect, the present disclosure provides a computer program product. Such a computer program product comprises a non-volatile data carrier, such as a CD, a DVD, a USB stick or other medium for storing data. A computer program is stored on the data carrier. The computer program can be loaded into a working memory of a computer system (in particular, into a working memory of a computer system of the present disclosure), where it can cause the computer system to perform the following steps:
- providing a plurality of data sets of a plurality of examination objects, each data set comprising (i) one or more base medical images of one or more base imaging techniques and (ii) a target medical image of a target imaging technique, wherein each base medical image is a result of an examination of an examination region of an examination object using one of the base imaging techniques, and the target medical image is a result of an examination of the examination region of the examination object using the target imaging technique,
- providing an image encoder, wherein the image encoder is configured and trained to generate an image embedding based on one or more medical images,
- for each data set: generating at least one image embedding of the one or more base medical images using the image encoder,
- providing a conditional generative model, wherein the conditional generative model is configured to generate a reconstructed medical image based on a medical image, a condition and model parameters,
- training the conditional generative model, wherein the training comprises, for each data set:
   - generating a reconstructed target medical image based on the target medical image and the at least one image embedding of the one or more base medical images, wherein the condition in the generation of the reconstructed target medical image is based on the at least one image embedding of the one or more base medical images,
   - determining a deviation between the target medical image and the reconstructed target medical image,
   - reducing the deviation by modifying model parameters of the conditional generative model,
- receiving one or more medical images of a new examination object, wherein each medical image is a result of an examination of the examination region of the new examination using one of the base imaging techniques,
- generating at least one image embedding based on the one or more medical images of the new examination object using the image encoder,
- generating a synthetic medical image using the trained conditional generative model, wherein the condition in the generation of the synthetic medical image is based on the at least one image embedding of the new examination object,
- outputting and/or storing the synthetic medical image and/or transmitting the synthetic medical image to a separate computer system.

## Claims

1. A computer-implemented method comprising:
- providing a plurality of data sets (DS) of a plurality of examination objects, each data set (DS) comprising (i) one or more base medical images (IB) of one or more base imaging techniques and (ii) a target medical image (IT) of a target imaging technique, wherein each base medical image (IB) is a result of an examination of an examination region of an examination object using one of the base imaging techniques, and the target medical image (IT) is a result of an examination of the examination region of the examination object using the target imaging technique,
- providing an image encoder (IE), wherein the image encoder (IE) is configured and trained to generate an image embedding based on one or more medical images,
- for each data set (DS): generating at least one image embedding (E) of the one or more base medical images (IB) using the image encoder (IE),
- providing a conditional generative model (CGM), wherein the conditional generative model (CGM) is configured to generate a reconstructed medical image based on a medical image, a condition and model parameters,
- training the conditional generative model (CGM), wherein the training comprises, for each data set (DS):
• generating a reconstructed target medical image (RIT) based on the target medical image (IT) and the at least one image embedding (E) of the one or more base medical images (IB), wherein the condition in the generation of the reconstructed target medical image (RIT) is based on the at least one image embedding (E) of the one or more base medical images (IB),
• determining a deviation between the target medical image (IT) and the reconstructed target medical image (RIT),
• reducing the deviation by modifying model parameters of the conditional generative model (CGM),
- receiving one or more medical images (Iⁿ) of a new examination object, wherein each medical image (Iⁿ) is a result of an examination of the examination region of the new examination using one of the base imaging techniques,
- generating at least one image embedding (Eⁿ) based on the one or more medical images (Iⁿ) of the new examination object using the image encoder (IE),
- generating a synthetic medical image (SI) using the trained conditional generative model (CGM^{t}), wherein the condition in the generation of the synthetic medical image (SI) is based on the at least one image embedding (Eⁿ)of the new examination object,
- outputting and/or storing the synthetic medical image (SI) and/or transmitting the synthetic medical image (SI) to a separate computer system,
**characterized in that**
the one or more data sets (DS) of the plurality of data sets comprise multiple base medical images (IB1, IB2, IB3) and the target medical image (IT),
each base medical image (IB1, IB2, IB3) of the multiple base medical images (IB1, IB2, IB3) is a result of an examination of the examination region of the examination object using one of the base imaging techniques,
generating at least one image embedding (E1, E2, E3) of the one or more base medical images (IB1, IB2, IB3) using the image encoder (IE) comprises:
- masking at least a part of one or more base medical images (IB1, IB2, IB3) of the multiple base medical images (IB1, IB2, IB3),
- generating an image embedding (E1, E2, E3) of each base medical image (IB1, IB2, IB3) and each at least partly masked base medical image (IB1, IB2, IB3), and combining the image embeddings (E1, E2, E3) into a combined image embedding (EC),
generating a reconstructed target medical image (RIT) based on the target medical image (IT) and the at least one image embedding (E1, E2, E3) of the one or more base medical images (IB1, IB2, IB3) comprises: generating a reconstructed target medical image (RIT) based on the target medical image (IT) and the combined image embedding (EC) of the base medical images (IB1, IB2, IB3), wherein the combined image embedding (EC) of the base medical images (IB1, IB2, IB3) is used as a condition in the generation of the reconstructed target medical image (RIT).

2. The method of claim 1, wherein each examination object of the plurality of examination objects is a human being, wherein the new examination object is a human being, and the examination region of each examination object of the plurality of examination objects as well as the examination region of the new examination object is or comprises a liver, kidney, heart, lung, brain, stomach, bladder, prostate, intestine, thyroid, eye, breast or a part of said parts or another part of the body of the respective examination object.

3. The method of claim 1 or 2, wherein the target imaging technique and each base imaging technique are selected from: X-ray radiography, computerized tomography, fluoroscopy, magnetic resonance imaging, ultrasonography, endoscopy, elastography, tactile imaging, thermography, microscopy, positron emission tomography, optical coherence tomography, fundus photography.

4. The method of any one of claims 1 to 3, wherein the one or more base medical images (IB) of one or more data sets (DS) comprise one or more MRI images, wherein the one or more medical images (Iⁿ) of the new examination object comprise one or more MRI images.

5. The method of any one of claims 1 to 4, wherein the one or more base medical images (IB) of one or more data sets (DS) comprise one or more CT images, wherein the one or more medical images (Iⁿ) of the new examination object comprise one or more CT images.

6. The method of any one of claims 1 to 5, wherein the one or more base medical images (IB) of one or more data sets (DS) comprise one or more PET images, wherein the one or more medical images (Iⁿ) of the new examination object comprise one or more PET images.

7. The method of any one of claims 1 to 6, wherein the target medical image (IT) is a CT image, and the synthetic medical image (SI) is a synthetic CT image.

8. The method of any one of claims 1 to 6, wherein the target medical image (IT) is a PET image, and the synthetic medical image (SI) is a synthetic PET image.

9. The method of any one of claims 1 to 6, wherein the target medical image (IT) is an MRI image, and the synthetic medical image (SI) is a synthetic MRI image.

10. The method of any one of claims 1 to 9, wherein
the one or more base medical images (IB) comprise one or more T1-weighted MRI images, the one or more medical images (Iⁿ) of the new examination object comprise one or more T1-weighted MRI images, the target medical image (IT) is a T2-weighted MRI image, and the synthetic medical image (SI) is a synthetic T2-weighted MRI image,
or
the one or more base medical images (IB) comprise one or more T2-weighted MRI images, the one or more medical images (Iⁿ) of the new examination object comprise one or more T2-weighted MRI images, the target medical image (IT) is a T1-weighted MRI image, and the synthetic medical image (SI) is a synthetic T1-weighted MRI image,
or
the one or more base medical images (IB) comprise one or more diffusion weighted MRI images, the one or more medical images (Iⁿ) of the new examination object comprise one or more diffusion weighted MRI images, the target medical image (IT) is an apparent diffusion coefficient map, and the synthetic medical image (SI) is an apparent diffusion coefficient map,
or
the one or more base medical images (IB) comprise one or more apparent diffusion coefficient maps, the one or more medical images (Iⁿ) of the new examination object comprise one or more diffusion apparent diffusion coefficient maps, the target medical image (IT) is a diffusion weighted MRI image, and the synthetic medical image (SI) is a diffusion weighted MRI image,
or
the one or more base medical images (IB) comprise one or more T1-weighted MRI images, the one or more medical images (Iⁿ) of the new examination object comprise one or more T1-weighted MRI images, the target medical image (IT) is a FLAIR MRI image, and the synthetic medical image (SI) is a synthetic FLAIR MRI image,
or
the one or more base medical images (IB) comprise one or more FLAIR MRI images, the one or more medical images (Iⁿ) of the new examination object comprise one or more FLAIR MRI images, the target medical image (IT) is a T1-weighted MRI image, and the synthetic medical image (SI) is a synthetic T1-weighted MRI image,
or
the one or more base medical images (IB) comprise one or more contrast enhanced images, the one or more medical images (Iⁿ) of the new examination object comprise one or more contrast enhanced images, the target medical image (IT) is a non-contrast image, and the synthetic medical image (SI) is a non-contrast image,
or
the one or more base medical images (IB) comprise one or more non-contrast mages, the one or more medical images (Iⁿ) of the new examination object comprise one or more non-contrast images, the target medical image (IT) is a contrast enhanced image, and the synthetic medical image (SI) is a contrast enhanced image,
or
the one or more base medical images (IB) comprise one or more contrast enhanced MRI images, the one or more medical images (Iⁿ) of the new examination object comprise one or more contrast enhanced MRI images, the target medical image (IT) is a non-contrast MRI image, and the synthetic medical image (SI) is a non-contrast MRI image,
or
the one or more base medical images (IB) comprise one or more non-contrast CT mages, the one or more medical images (Iⁿ) of the new examination object comprise one or more non-contrast CT images, the target medical image (IT) is a contrast enhanced CT image, and the synthetic medical image (SI) is a contrast enhanced CT image,
or
the one or more base medical images (IB) comprise one or more proton density weighted MRI images, the one or more medical images (Iⁿ) of the new examination object comprise one or more proton density weighted MRI images, the target medical image (IT) is a T1-weighted image or a T2-weighted image, and the synthetic medical image (SI) is a synthetic T1-weighted image or a synthetic T2-weighted image,
or
the one or more base medical images (IB) comprise one or more T1-weighted images and/or a T2-weighted images, the one or more medical images (Iⁿ) of the new examination object comprise one or more T1-weighted images and/or a T2-weighted images, the target medical image (IT) is a proton density weighted MRI image, and the synthetic medical image (SI) is a synthetic proton density weighted MRI image,
or
the one or more base medical images (IB) comprise one or more CT images, the one or more medical images (Iⁿ) of the new examination object comprise one or more CT images, the target medical image (IT) is a bone-enhanced CT image, and the synthetic medical image (SI) is a synthetic bone-enhanced CT image,
or
the one or more base medical images (IB) comprise one or more CT images, the one or more medical images (Iⁿ) of the new examination object comprise one or more CT images, the target medical image (IT) is a lung-enhanced CT image, and the synthetic medical image (SI) is a synthetic lung-enhanced CT image.

11. The method of any of one of claims 1 to 10,
wherein the conditional generative model (CGM) is a conditional diffusion model comprising a noising model (NM) and a denoising model (DM),
wherein the noising model (NM) is configured to receive the target medical image (IT) and produce noisy data (ND) in response to receipt of the target medical image (IT),
wherein the denoising model (DM) is configured to reconstruct the target medical image (IT) from noisy data (ND).

12. The method of any of claims 1 to 11, wherein the conditional generative model (CGM) is a latent diffusion model.

13. The method of any of claims 1 to 12,
wherein one or more data sets (DS) of the plurality of data sets (DS) comprise a number p of base medical images (IB) and the target medical image (IT), wherein p is 2, 3, 4, 5, 6, 7, 8, 9 or 10,
wherein each base medical image (IB) of the number p of base medical images (IB) is a result of an examination of the examination region of the examination object using one of the base imaging techniques,
wherein generating at least one image embedding (E) of the one or more base medical images (IB) using the image encoder (IE) comprises:
- dividing each base medical image (IB) of the number p of base medical images (IB) into multiple patches (P1, P2, P3, P4, P5, P6, P7, P8),
- generating an image embedding (E) based on selected patches of the multiple patches (P1, P2, P3, P4, P5, P6, P7, P8) using the image encoder (IE), wherein each selected patch represents a different sub-region of the examination region,
wherein generating a reconstructed target medical image (RIT) based on the target medical image (IT) and the at least one image embedding (E) of the one or more base medical images (IB )comprises: generating a reconstructed target medical image (RIT) based on the target medical image (IT) and the image embedding (IE), wherein the image embedding (IE) is used as a condition in the generation of the reconstructed target medical image (RIT).

14. A computer system (1) comprising:
a processor (20); and
a memory storing (50) an application program (60) configured to perform, when executed by the processor (20), the method of any one of claims 1 to 13.

15. A non-transitory computer readable storage medium having stored thereon software instructions that, when executed by a processor (20) of a computer system (1), cause the computer system to execute the method of any one of claims 1 to 13.

## Patentansprüche

1. Computerimplementiertes Verfahren, umfassend:
• Bereitstellen einer Vielzahl von Datensätzen (DS) einer Vielzahl von Untersuchungsobjekten, wobei jeder Datensatz (DS) (i) ein oder mehrere medizinische Basisbilder (IB) einer oder mehrerer Basis-Bildgebungstechniken und (ii) ein medizinisches Zielbild (IT) einer Ziel-Bildgebungstechnik umfasst, wobei jedes medizinische Basisbild (IB) ein Ergebnis einer Untersuchung einer Untersuchungsregion eines Untersuchungsobjekts unter Verwendung einer der Basis-Bildgebungstechniken ist, und das medizinische Zielbild (IT) ein Ergebnis einer Untersuchung der Untersuchungsregion des Untersuchungsobjekts unter Verwendung der Ziel-Bildgebungstechnik ist,
• Bereitstellen eines Bildkodierers (IE), wobei der Bildkodierer (IE) konfiguriert und trainiert ist, eine Bildeinbettung basierend auf einem oder mehreren medizinischen Bildern zu erzeugen,
• für jeden Datensatz (DS): Erzeugen mindestens einer Bildeinbettung (E) des einen oder der mehreren medizinischen Basisbilder (IB) unter Verwendung des Bildkodierers (IE),
• Bereitstellen eines bedingten generativen Modells (CGM), wobei das bedingte generative Modell (CGM) konfiguriert ist, ein rekonstruiertes medizinisches Bild basierend auf einem medizinischen Bild, einer Bedingung und Modellparametern zu erzeugen,
• Trainieren des bedingten generativen Modells (CGM), wobei das Trainieren für jeden Datensatz (DS) umfasst:Erzeugen eines rekonstruierten medizinischen Zielbildes (RIT) basierend auf dem medizinischen Zielbild (IT) und der mindestens einen Bildeinbettung (E) des einen oder der mehreren medizinischen Basisbilder (IB), wobei die Bedingung bei der Erzeugung des rekonstruierten medizinischen Zielbildes (RIT) auf der mindestens einen Bildeinbettung (E) des einen oder der mehreren medizinischen Basisbilder (IB) basiert,Bestimmen einer Abweichung zwischen dem medizinischen Zielbild (IT) und dem rekonstruierten medizinischen Zielbild (RIT), Verringern der Abweichung durch Modifizieren von Modellparametern des bedingten generativen Modells (CGM),
• Empfangen eines oder mehrerer medizinischer Bilder (In) eines neuen Untersuchungsobjekts, wobei jedes medizinische Bild (In) ein Ergebnis einer Untersuchung der Untersuchungsregion der neuen Untersuchung unter Verwendung einer der Basis-Bildgebungstechniken ist,
• Erzeugen mindestens einer Bildeinbettung (En) basierend auf dem einen oder den mehreren medizinischen Bildern (In) des neuen Untersuchungsobjekts unter Verwendung des Bildkodierers (IE),
• Erzeugen eines synthetischen medizinischen Bildes (SI) unter Verwendung des trainierten bedingten generativen Modells (CGMt), wobei die Bedingung bei der Erzeugung des synthetischen medizinischen Bildes (SI) auf der mindestens einen Bildeinbettung (En) des neuen Untersuchungsobjekts basiert,
• Ausgeben und/oder Speichern des synthetischen medizinischen Bildes (SI) und/oder Übertragen des synthetischen medizinischen Bildes (SI) an ein separates Computersystem,
**dadurch gekennzeichnet, dass**
der eine oder die mehreren Datensätze (DS) der Vielzahl von Datensätzen mehrere medizinische Basisbilder (IB1, IB2, IB3) und das medizinische Zielbild (IT) umfassen, wobei jedes medizinische Basisbild (IB1, IB2, IB3) der mehreren medizinischen Basisbilder (IB1, IB2, IB3) ein Ergebnis einer Untersuchung der Untersuchungsregion des Untersuchungsobjekts unter Verwendung einer der Basis-Bildgebungstechniken ist,
das Erzeugen mindestens einer Bildeinbettung (E1, E2, E3) des einen oder der mehreren medizinischen Basisbilder (IB1, IB2, IB3) unter Verwendung des Bildkodierers (IE) umfasst:
• Maskieren mindestens eines Teils eines oder mehrerer medizinischer Basisbilder (IB1, IB2, IB3) der mehreren medizinischen Basisbilder (IB1, IB2, IB3),
• Erzeugen einer Bildeinbettung (E1, E2, E3) jedes medizinischen Basisbildes (IB1, IB2, IB3) und jedes zumindest teilweise maskierten medizinischen Basisbildes (IB1, IB2, IB3), und Kombinieren der Bildeinbettungen (E1, E2, E3) zu einer kombinierten Bildeinbettung (EC),
das Erzeugen eines rekonstruierten medizinischen Zielbildes (RIT) basierend auf dem medizinischen Zielbild (IT) und der mindestens einen Bildeinbettung (E1, E2, E3) des einen oder der mehreren medizinischen Basisbilder (IB1, IB2, IB3) umfasst: Erzeugen eines rekonstruierten medizinischen Zielbildes (RIT) basierend auf dem medizinischen Zielbild (IT) und der kombinierten Bildeinbettung (EC) der medizinischen Basisbilder (IB1, IB2, IB3), wobei die kombinierte Bildeinbettung (EC) der medizinischen Basisbilder (IB1, IB2, IB3) als Bedingung bei der Erzeugung des rekonstruierten medizinischen Zielbildes (RIT) verwendet wird.

2. Verfahren nach Anspruch 1, wobei jedes Untersuchungsobjekt der Vielzahl von Untersuchungsobjekten ein Mensch ist, wobei das neue Untersuchungsobjekt ein Mensch ist, und die Untersuchungsregion jedes Untersuchungsobjekts der Vielzahl von Untersuchungsobjekten sowie die Untersuchungsregion des neuen Untersuchungsobjekts eine Leber, Niere, ein Herz, eine Lunge, ein Gehirn, ein Magen, eine Blase, eine Prostata, ein Darm, eine Schilddrüse, ein Auge, eine Brust oder ein Teil der genannten Teile oder ein anderer Teil des Körpers des jeweiligen Untersuchungsobjekts ist oder umfasst.

3. Verfahren nach Anspruch 1 oder 2, wobei die Ziel-Bildgebungstechnik und jede Basis-Bildgebungstechnik ausgewählt sind aus: Röntgenradiographie, Computertomographie, Fluoroskopie, Magnetresonanztomographie, Ultrasonographie, Endoskopie, Elastographie, taktiler Bildgebung, Thermographie, Mikroskopie, Positronen-Emissions-Tomographie, optischer Kohärenztomographie, Fundusfotographie.

4. Verfahren nach einem der Ansprüche 1 bis 3, wobei das eine oder die mehreren medizinischen Basisbilder (IB) eines oder mehrerer Datensätze (DS) ein oder mehrere MRT-Bilder umfassen, wobei das eine oder die mehreren medizinischen Bilder (In) des neuen Untersuchungsobjekts ein oder mehrere MRT-Bilder umfassen.

5. Verfahren nach einem der Ansprüche 1 bis 4, wobei das eine oder die mehreren medizinischen Basisbilder (IB) eines oder mehrerer Datensätze (DS) ein oder mehrere CT-Bilder umfassen, wobei das eine oder die mehreren medizinischen Bilder (In) des neuen Untersuchungsobjekts ein oder mehrere CT-Bilder umfassen.

6. Verfahren nach einem der Ansprüche 1 bis 5, wobei das eine oder die mehreren medizinischen Basisbilder (IB) eines oder mehrerer Datensätze (DS) ein oder mehrere PET-Bilder umfassen, wobei das eine oder die mehreren medizinischen Bilder (In) des neuen Untersuchungsobjekts ein oder mehrere PET-Bilder umfassen.

7. Verfahren nach einem der Ansprüche 1 bis 6, wobei das medizinische Zielbild (IT) ein CT-Bild ist und das synthetische medizinische Bild (SI) ein synthetisches CT-Bild ist.

8. Verfahren nach einem der Ansprüche 1 bis 6, wobei das medizinische Zielbild (IT) ein PET-Bild ist und das synthetische medizinische Bild (SI) ein synthetisches PET-Bild ist.

9. Verfahren nach einem der Ansprüche 1 bis 6, wobei das medizinische Zielbild (IT) ein MRT-Bild ist und das synthetische medizinische Bild (SI) ein synthetisches MRT-Bild ist.

10. Verfahren nach einem der Ansprüche 1 bis 9, wobei
das eine oder die mehreren medizinischen Basisbilder (IB) ein oder mehrere T1-gewichtete MRT-Bilder umfassen, das eine oder die mehreren medizinischen Bilder (In) des neuen Untersuchungsobjekts ein oder mehrere T1-gewichtete MRT-Bilder umfassen, das medizinische Zielbild (IT) ein T2-gewichtetes MRT-Bild ist und das synthetische medizinische Bild (SI) ein synthetisches T2-gewichtetes MRT-Bild ist, oder
das eine oder die mehreren medizinischen Basisbilder (IB) ein oder mehrere T2-gewichtete MRT-Bilder umfassen, das eine oder die mehreren medizinischen Bilder (In) des neuen Untersuchungsobjekts ein oder mehrere T2-gewichtete MRT-Bilder umfassen, das medizinische Zielbild (IT) ein T1-gewichtetes MRT-Bild ist und das synthetische medizinische Bild (SI) ein synthetisches T1-gewichtetes MRT-Bild ist, oder
das eine oder die mehreren medizinischen Basisbilder (IB) ein oder mehrere diffusionsgewichtete MRT-Bilder umfassen, das eine oder die mehreren medizinischen Bilder (In) des neuen Untersuchungsobjekts ein oder mehrere diffusionsgewichtete MRT-Bilder umfassen, das medizinische Zielbild (IT) eine Karte des scheinbaren Diffusionskoeffizienten ist und das synthetische medizinische Bild (SI) eine Karte des scheinbaren Diffusionskoeffizienten ist, oder
das eine oder die mehreren medizinischen Basisbilder (IB) ein oder mehrere Karten des scheinbaren Diffusionskoeffizienten umfassen, das eine oder die mehreren medizinischen Bilder (In) des neuen Untersuchungsobjekts ein oder mehrere Karten des scheinbaren Diffusionskoeffizienten umfassen, das medizinische Zielbild (IT) ein diffusionsgewichtetes MRT-Bild ist und das synthetische medizinische Bild (SI) ein diffusionsgewichtetes MRT-Bild ist, oder
das eine oder die mehreren medizinischen Basisbilder (IB) ein oder mehrere T1-gewichtete MRT-Bilder umfassen, das eine oder die mehreren medizinischen Bilder (In) des neuen Untersuchungsobjekts ein oder mehrere T1-gewichtete MRT-Bilder umfassen, das medizinische Zielbild (IT) ein FLAIR-MRT-Bild ist und das synthetische medizinische Bild (SI) ein synthetisches FLAIR-MRT-Bild ist, oder
das eine oder die mehreren medizinischen Basisbilder (IB) ein oder mehrere FLAIR-MRT-Bilder umfassen, das eine oder die mehreren medizinischen Bilder (In) des neuen Untersuchungsobjekts ein oder mehrere FLAIR-MRT-Bilder umfassen, das medizinische Zielbild (IT) ein T1-gewichtetes MRT-Bild ist und das synthetische medizinische Bild (SI) ein synthetisches T1-gewichtetes MRT-Bild ist, oder
das eine oder die mehreren medizinischen Basisbilder (IB) ein oder mehrere kontrastmittelverstärkte Bilder umfassen, das eine oder die mehreren medizinischen Bilder (In) des neuen Untersuchungsobjekts ein oder mehrere kontrastmittelverstärkte Bilder umfassen, das medizinische Zielbild (IT) ein kontrastmittelfreies Bild ist und das synthetische medizinische Bild (SI) ein kontrastmittelfreies Bild ist, oder
das eine oder die mehreren medizinischen Basisbilder (IB) ein oder mehrere kontrastmittelfreie Bilder umfassen, das eine oder die mehreren medizinischen Bilder (In) des neuen Untersuchungsobjekts ein oder mehrere kontrastmittelfreie Bilder umfassen, das medizinische Zielbild (IT) ein kontrastmittelverstärktes Bild ist und das synthetische medizinische Bild (SI) ein kontrastmittelverstärktes Bild ist, oder
das eine oder die mehreren medizinischen Basisbilder (IB) ein oder mehrere kontrastmittelverstärkte MRT-Bilder umfassen, das eine oder die mehreren medizinischen Bilder (In) des neuen Untersuchungsobjekts ein oder mehrere kontrastmittelverstärkte MRT-Bilder umfassen, das medizinische Zielbild (IT) ein kontrastmittelfreies MRT-Bild ist und das synthetische medizinische Bild (SI) ein kontrastmittelfreies MRT-Bild ist, oder
das eine oder die mehreren medizinischen Basisbilder (IB) ein oder mehrere kontrastmittelfreie CT-Bilder umfassen, das eine oder die mehreren medizinischen Bilder (In) des neuen Untersuchungsobjekts ein oder mehrere kontrastmittelfreie CT-Bilder umfassen, das medizinische Zielbild (IT) ein kontrastmittelverstärktes CT-Bild ist und das synthetische medizinische Bild (SI) ein kontrastmittelverstärktes CT-Bild ist, oder
das eine oder die mehreren medizinischen Basisbilder (IB) ein oder mehrere protonendichtegewichtete MRT-Bilder umfassen, das eine oder die mehreren medizinischen Bilder (In) des neuen Untersuchungsobjekts ein oder mehrere protonendichtegewichtete MRT-Bilder umfassen, das medizinische Zielbild (IT) ein T1-gewichtetes Bild oder ein T2-gewichtetes Bild ist und das synthetische medizinische Bild (SI) ein synthetisches T1-gewichtetes Bild oder ein synthetisches T2-gewichtetes Bild ist, oder
das eine oder die mehreren medizinischen Basisbilder (IB) ein oder mehrere T1-gewichtete Bilder und/oder T2-gewichtete Bilder umfassen, das eine oder die mehreren medizinischen Bilder (In) des neuen Untersuchungsobjekts ein oder mehrere T1-gewichtete Bilder und/oder T2-gewichtete Bilder umfassen, das medizinische Zielbild (IT) ein protonendichtegewichtetes MRT-Bild ist und das synthetische medizinische Bild (SI) ein synthetisches protonendichtegewichtetes MRT-Bild ist, oder
das eine oder die mehreren medizinischen Basisbilder (IB) ein oder mehrere CT-Bilder umfassen, das eine oder die mehreren medizinischen Bilder (In) des neuen Untersuchungsobjekts ein oder mehrere CT-Bilder umfassen, das medizinische Zielbild (IT) ein knochenverstärktes CT-Bild ist und das synthetische medizinische Bild (SI) ein synthetisches knochenverstärktes CT-Bild ist, oder
das eine oder die mehreren medizinischen Basisbilder (IB) ein oder mehrere CT-Bilder umfassen, das eine oder die mehreren medizinischen Bilder (In) des neuen Untersuchungsobjekts ein oder mehrere CT-Bilder umfassen, das medizinische Zielbild (IT) ein lungenverstärktes CT-Bild ist und das synthetische medizinische Bild (SI) ein synthetisches lungenverstärktes CT-Bild ist.

11. Verfahren nach einem der Ansprüche 1 bis 10, wobei das bedingte generative Modell (CGM) ein bedingtes Diffusionsmodell ist, das ein Verrauschungsmodell (NM) und ein Entrauschungsmodell (DM) umfasst, wobei das Verrauschungsmodell (NM) konfiguriert ist, das medizinische Zielbild (IT) zu empfangen und verrauschte Daten (ND) als Reaktion auf den Empfang des medizinischen Zielbildes (IT) zu erzeugen, wobei das Entrauschungsmodell (DM) konfiguriert ist, das medizinische Zielbild (IT) aus verrauschten Daten (ND) zu rekonstruieren.

12. Verfahren nach einem der Ansprüche 1 bis 11, wobei das bedingte generative Modell (CGM) ein latentes Diffusionsmodell ist.

13. Verfahren nach einem der Ansprüche 1 bis 12, wobei ein oder mehrere Datensätze (DS) der Vielzahl von Datensätzen (DS) eine Anzahl p von medizinischen Basisbildern (IB) und das medizinische Zielbild (IT) umfassen, wobei p gleich 2, 3, 4, 5, 6, 7, 8, 9 oder 10 ist, wobei jedes medizinische Basisbild (IB) der Anzahl p von medizinischen Basisbildern (IB) ein Ergebnis einer Untersuchung der Untersuchungsregion des Untersuchungsobjekts unter Verwendung einer der Basis-Bildgebungstechniken ist, wobei das Erzeugen mindestens einer Bildeinbettung (E) des einen oder der mehreren medizinischen Basisbilder (IB) unter Verwendung des Bildkodierers (IE) umfasst:
• Unterteilen jedes medizinischen Basisbildes (IB) der Anzahl p von medizinischen Basisbildern (IB) in mehrere Patches (P1, P2, P3, P4, P5, P6, P7, P8),
• Erzeugen einer Bildeinbettung (E) basierend auf ausgewählten Patches der mehreren Patches (P1, P2, P3, P4, P5, P6, P7, P8) unter Verwendung des Bildkodierers (IE), wobei jeder ausgewählte Patch eine andere Teilregion der Untersuchungsregion repräsentiert,
wobei das Erzeugen eines rekonstruierten medizinischen Zielbildes (RIT) basierend auf dem medizinischen Zielbild (IT) und der mindestens einen Bildeinbettung (E) des einen oder der mehreren medizinischen Basisbilder (IB) umfasst: Erzeugen eines rekonstruierten medizinischen Zielbildes (RIT) basierend auf dem medizinischen Zielbild (IT) und der Bildeinbettung (IE), wobei die Bildeinbettung (IE) als Bedingung bei der Erzeugung des rekonstruierten medizinischen Zielbildes (RIT) verwendet wird.

14. Computersystem (1), umfassend:
einen Prozessor (20); und
einen Speicher (50), der ein Anwendungsprogramm (60) speichert, das konfiguriert ist, bei Ausführung durch den Prozessor (20) das Verfahren nach einem der Ansprüche 1 bis 13 durchzuführen.

15. Nichtflüchtiges computerlesbares Speichermedium, auf dem Softwareanweisungen gespeichert sind, die bei Ausführung durch einen Prozessor (20) eines Computersystems (1) das Computersystem veranlassen, das Verfahren nach einem der Ansprüche 1 bis 13 auszuführen.

## Revendications

1. Procédé mis en œuvre par ordinateur comprenant :
• la fourniture d'une pluralité de jeux de données (DS) d'une pluralité d'objets d'examen, chaque jeu de données (DS) comprenant (i) une ou plusieurs images médicales de base (IB) d'une ou plusieurs techniques d'imagerie de base et (ii) une image médicale cible (IT) d'une technique d'imagerie cible, dans lequel chaque image médicale de base (IB) est un résultat d'un examen d'une région d'examen d'un objet d'examen en utilisant l'une des techniques d'imagerie de base, et l'image médicale cible (IT) est un résultat d'un examen de la région d'examen de l'objet d'examen en utilisant la technique d'imagerie cible,
• la fourniture d'un encodeur d'images (IE), dans lequel l'encodeur d'images (IE) est configuré et entraîné pour générer une incorporation d'image sur la base d'une ou plusieurs images médicales,
• pour chaque jeu de données (DS) : la génération d'au moins une incorporation d'image (E) de la ou des plusieurs images médicales de base (IB) en utilisant l'encodeur d'images (IE),
• la fourniture d'un modèle génératif conditionnel (CGM), dans lequel le modèle génératif conditionnel (CGM) est configuré pour générer une image médicale reconstruite sur la base d'une image médicale, d'une condition et de paramètres de modèle,
• l'entraînement du modèle génératif conditionnel (CGM), dans lequel l'entraînement comprend, pour chaque jeu de données (DS) :la génération d'une image médicale cible reconstruite (RIT) sur la base de l'image médicale cible (IT) et de l'au moins une incorporation d'image (E) de la ou des plusieurs images médicales de base (IB), dans lequel la condition lors de la génération de l'image médicale cible reconstruite (RIT) est basée sur l'au moins une incorporation d'image (E) de la ou des plusieurs images médicales de base (IB),la détermination d'un écart entre l'image médicale cible (IT) et l'image médicale cible reconstruite (RIT),la réduction de l'écart par modification de paramètres de modèle du modèle génératif conditionnel (CGM),
• la réception d'une ou plusieurs images médicales (In) d'un nouvel objet d'examen, dans lequel chaque image médicale (In) est un résultat d'un examen de la région d'examen du nouvel examen en utilisant l'une des techniques d'imagerie de base,
• la génération d'au moins une incorporation d'image (En) sur la base de la ou des plusieurs images médicales (In) du nouvel objet d'examen en utilisant l'encodeur d'images (IE),
• la génération d'une image médicale synthétique (SI) en utilisant le modèle génératif conditionnel entraîné (CGMt), dans lequel la condition lors de la génération de l'image médicale synthétique (SI) est basée sur l'au moins une incorporation d'image (En) du nouvel objet d'examen,
• la sortie et/ou le stockage de l'image médicale synthétique (SI) et/ou la transmission de l'image médicale synthétique (SI) à un système informatique séparé,
**caractérisé en ce que**
le ou les plusieurs jeux de données (DS) de la pluralité de jeux de données comprennent plusieurs images médicales de base (IB1, IB2, IB3) et l'image médicale cible (IT), chaque image médicale de base (IB1, IB2, IB3) des plusieurs images médicales de base (IB1, IB2, IB3) est un résultat d'un examen de la région d'examen de l'objet d'examen en utilisant l'une des techniques d'imagerie de base,
la génération d'au moins une incorporation d'image (E1, E2, E3) de la ou des plusieurs images médicales de base (IB1, IB2, IB3) en utilisant l'encodeur d'images (IE) comprend :
• le masquage d'au moins une partie d'une ou plusieurs images médicales de base (IB1, IB2, IB3) des plusieurs images médicales de base (IB1, IB2, IB3),
• la génération d'une incorporation d'image (E1, E2, E3) de chaque image médicale de base (IB1, IB2, IB3) et de chaque image médicale de base au moins partiellement masquée (IB1, IB2, IB3), et la combinaison des incorporations d'image (E1, E2, E3) en une incorporation d'image combinée (EC),
la génération d'une image médicale cible reconstruite (RIT) sur la base de l'image médicale cible (IT) et de l'au moins une incorporation d'image (E1, E2, E3) de la ou des plusieurs images médicales de base (IB1, IB2, IB3) comprend : la génération d'une image médicale cible reconstruite (RIT) sur la base de l'image médicale cible (IT) et de l'incorporation d'image combinée (EC) des images médicales de base (IB1, IB2, IB3), dans lequel l'incorporation d'image combinée (EC) des images médicales de base (IB1, IB2, IB3) est utilisée comme condition lors de la génération de l'image médicale cible reconstruite (RIT).

2. Procédé selon la revendication 1, dans lequel chaque objet d'examen de la pluralité d'objets d'examen est un être humain, dans lequel le nouvel objet d'examen est un être humain, et la région d'examen de chaque objet d'examen de la pluralité d'objets d'examen ainsi que la région d'examen du nouvel objet d'examen est ou comprend un foie, un rein, un cœur, un poumon, un cerveau, un estomac, une vessie, une prostate, un intestin, une thyroïde, un œil, un sein ou une partie desdites parties ou une autre partie du corps de l'objet d'examen respectif.

3. Procédé selon la revendication 1 ou 2, dans lequel la technique d'imagerie cible et chaque technique d'imagerie de base sont sélectionnées parmi : la radiographie à rayons X, la tomodensitométrie, la fluoroscopie, l'imagerie par résonance magnétique, l'ultrasonographie, l'endoscopie, l'élastographie, l'imagerie tactile, la thermographie, la microscopie, la tomographie par émission de positons, la tomographie par cohérence optique, la photographie du fond d'œil.

4. Procédé selon l'une quelconque des revendications 1 à 3, dans lequel la ou les plusieurs images médicales de base (IB) d'un ou plusieurs jeux de données (DS) comprennent une ou plusieurs images IRM, dans lequel la ou les plusieurs images médicales (In) du nouvel objet d'examen comprennent une ou plusieurs images IRM.

5. Procédé selon l'une quelconque des revendications 1 à 4, dans lequel la ou les plusieurs images médicales de base (IB) d'un ou plusieurs jeux de données (DS) comprennent une ou plusieurs images CT, dans lequel la ou les plusieurs images médicales (In) du nouvel objet d'examen comprennent une ou plusieurs images CT.

6. Procédé selon l'une quelconque des revendications 1 à 5, dans lequel la ou les plusieurs images médicales de base (IB) d'un ou plusieurs jeux de données (DS) comprennent une ou plusieurs images TEP, dans lequel la ou les plusieurs images médicales (In) du nouvel objet d'examen comprennent une ou plusieurs images TEP.

7. Procédé selon l'une quelconque des revendications 1 à 6, dans lequel l'image médicale cible (IT) est une image CT, et l'image médicale synthétique (SI) est une image CT synthétique.

8. Procédé selon l'une quelconque des revendications 1 à 6, dans lequel l'image médicale cible (IT) est une image TEP, et l'image médicale synthétique (SI) est une image TEP synthétique.

9. Procédé selon l'une quelconque des revendications 1 à 6, dans lequel l'image médicale cible (IT) est une image IRM, et l'image médicale synthétique (SI) est une image IRM synthétique.

10. Procédé selon l'une quelconque des revendications 1 à 9, dans lequel
la ou les plusieurs images médicales de base (IB) comprennent une ou plusieurs images IRM pondérées en T1, la ou les plusieurs images médicales (In) du nouvel objet d'examen comprennent une ou plusieurs images IRM pondérées en T1, l'image médicale cible (IT) est une image IRM pondérée en T2, et l'image médicale synthétique (SI) est une image IRM synthétique pondérée en T2, ou
la ou les plusieurs images médicales de base (IB) comprennent une ou plusieurs images IRM pondérées en T2, la ou les plusieurs images médicales (In) du nouvel objet d'examen comprennent une ou plusieurs images IRM pondérées en T2, l'image médicale cible (IT) est une image IRM pondérée en T1, et l'image médicale synthétique (SI) est une image IRM synthétique pondérée en T1, ou
la ou les plusieurs images médicales de base (IB) comprennent une ou plusieurs images IRM pondérées en diffusion, la ou les plusieurs images médicales (In) du nouvel objet d'examen comprennent une ou plusieurs images IRM pondérées en diffusion, l'image médicale cible (IT) est une carte de coefficient de diffusion apparent, et l'image médicale synthétique (SI) est une carte de coefficient de diffusion apparent, ou
la ou les plusieurs images médicales de base (IB) comprennent une ou plusieurs cartes de coefficient de diffusion apparent, la ou les plusieurs images médicales (In) du nouvel objet d'examen comprennent une ou plusieurs cartes de coefficient de diffusion apparent, l'image médicale cible (IT) est une image IRM pondérée en diffusion, et l'image médicale synthétique (SI) est une image IRM pondérée en diffusion, ou
la ou les plusieurs images médicales de base (IB) comprennent une ou plusieurs images IRM pondérées en T1, la ou les plusieurs images médicales (In) du nouvel objet d'examen comprennent une ou plusieurs images IRM pondérées en T1, l'image médicale cible (IT) est une image IRM FLAIR, et l'image médicale synthétique (SI) est une image IRM FLAIR synthétique, ou
la ou les plusieurs images médicales de base (IB) comprennent une ou plusieurs images IRM FLAIR, la ou les plusieurs images médicales (In) du nouvel objet d'examen comprennent une ou plusieurs images IRM FLAIR, l'image médicale cible (IT) est une image IRM pondérée en T1, et l'image médicale synthétique (SI) est une image IRM synthétique pondérée en T1, ou la ou les plusieurs images médicales de base (IB) comprennent une ou plusieurs images à contraste renforcé, la ou les plusieurs images médicales (In) du nouvel objet d'examen comprennent une ou plusieurs images à contraste renforcé, l'image médicale cible (IT) est une image sans produit de contraste, et l'image médicale synthétique (SI) est une image sans produit de contraste, ou
la ou les plusieurs images médicales de base (IB) comprennent une ou plusieurs images sans produit de contraste, la ou les plusieurs images médicales (In) du nouvel objet d'examen comprennent une ou plusieurs images sans produit de contraste, l'image médicale cible (IT) est une image à contraste renforcé, et l'image médicale synthétique (SI) est une image à contraste renforcé, ou
la ou les plusieurs images médicales de base (IB) comprennent une ou plusieurs images IRM à contraste renforcé, la ou les plusieurs images médicales (In) du nouvel objet d'examen comprennent une ou plusieurs images IRM à contraste renforcé, l'image médicale cible (IT) est une image IRM sans produit de contraste, et l'image médicale synthétique (SI) est une image IRM sans produit de contraste, ou
la ou les plusieurs images médicales de base (IB) comprennent une ou plusieurs images CT sans produit de contraste, la ou les plusieurs images médicales (In) du nouvel objet d'examen comprennent une ou plusieurs images CT sans produit de contraste, l'image médicale cible (IT) est une image CT à contraste renforcé, et l'image médicale synthétique (SI) est une image CT à contraste renforcé, ou
la ou les plusieurs images médicales de base (IB) comprennent une ou plusieurs images IRM pondérées en densité de protons, la ou les plusieurs images médicales (In) du nouvel objet d'examen comprennent une ou plusieurs images IRM pondérées en densité de protons, l'image médicale cible (IT) est une image pondérée en T1 ou une image pondérée en T2, et l'image médicale synthétique (SI) est une image synthétique pondérée en T1 ou une image synthétique pondérée en T2, ou
la ou les plusieurs images médicales de base (IB) comprennent une ou plusieurs images pondérées en T1 et/ou images pondérées en T2, la ou les plusieurs images médicales (In) du nouvel objet d'examen comprennent une ou plusieurs images pondérées en T1 et/ou images pondérées en T2, l'image médicale cible (IT) est une image IRM pondérée en densité de protons, et l'image médicale synthétique (SI) est une image IRM synthétique pondérée en densité de protons, ou
la ou les plusieurs images médicales de base (IB) comprennent une ou plusieurs images CT, la ou les plusieurs images médicales (In) du nouvel objet d'examen comprennent une ou plusieurs images CT, l'image médicale cible (IT) est une image CT à rehaussement osseux, et l'image médicale synthétique (SI) est une image CT synthétique à rehaussement osseux, ou
la ou les plusieurs images médicales de base (IB) comprennent une ou plusieurs images CT, la ou les plusieurs images médicales (In) du nouvel objet d'examen comprennent une ou plusieurs images CT, l'image médicale cible (IT) est une image CT à rehaussement pulmonaire, et l'image médicale synthétique (SI) est une image CT synthétique à rehaussement pulmonaire.

11. Procédé selon l'une quelconque des revendications 1 à 10, dans lequel le modèle génératif conditionnel (CGM) est un modèle de diffusion conditionnel comprenant un modèle de bruitage (NM) et un modèle de débruitage (DM), dans lequel le modèle de bruitage (NM) est configuré pour recevoir l'image médicale cible (IT) et produire des données bruitées (ND) en réponse à la réception de l'image médicale cible (IT), dans lequel le modèle de débruitage (DM) est configuré pour reconstruire l'image médicale cible (IT) à partir de données bruitées (ND).

12. Procédé selon l'une quelconque des revendications 1 à 11, dans lequel le modèle génératif conditionnel (CGM) est un modèle de diffusion latent.

13. Procédé selon l'une quelconque des revendications 1 à 12, dans lequel un ou plusieurs jeux de données (DS) de la pluralité de jeux de données (DS) comprennent un nombre p d'images médicales de base (IB) et l'image médicale cible (IT), dans lequel p est égal à 2, 3, 4, 5, 6, 7, 8, 9 ou 10, dans lequel chaque image médicale de base (IB) du nombre p d'images médicales de base (IB) est un résultat d'un examen de la région d'examen de l'objet d'examen en utilisant l'une des techniques d'imagerie de base, dans lequel la génération d'au moins une incorporation d'image (E) de la ou des plusieurs images médicales de base (IB) en utilisant l'encodeur d'images (IE) comprend :
• la division de chaque image médicale de base (IB) du nombre p d'images médicales de base (IB) en plusieurs patches (P1, P2, P3, P4, P5, P6, P7, P8),
• la génération d'une incorporation d'image (E) sur la base de patches sélectionnés parmi les plusieurs patches (P1, P2, P3, P4, P5, P6, P7, P8) en utilisant l'encodeur d'images (IE), dans lequel chaque patch sélectionné représente une sous-région différente de la région d'examen,
dans lequel la génération d'une image médicale cible reconstruite (RIT) sur la base de l'image médicale cible (IT) et de l'au moins une incorporation d'image (E) de la ou des plusieurs images médicales de base (IB) comprend : la génération d'une image médicale cible reconstruite (RIT) sur la base de l'image médicale cible (IT) et de l'incorporation d'image (IE), dans lequel l'incorporation d'image (IE) est utilisée comme condition lors de la génération de l'image médicale cible reconstruite (RIT).

14. Système informatique (1) comprenant :
un processeur (20) ; et
une mémoire (50) stockant un programme d'application (60) configuré pour exécuter, lorsqu'il est exécuté par le processeur (20), le procédé selon l'une quelconque des revendications 1 à 13.

15. Support de stockage non transitoire lisible par ordinateur sur lequel sont stockées des instructions logicielles qui, lorsqu'elles sont exécutées par un processeur (20) d'un système informatique (1), amènent le système informatique à exécuter le procédé selon l'une quelconque des revendications 1 à 13.
